(19) Europäisches Patentamt
European Patent Office
Office européen des brevets

(11) **EP 3 895 865 A1**

(12) **EUROPEAN PATENT APPLICATION**
published in accordance with Art. 153(4) EPC

(43) Date of publication:
**20.10.2021 Bulletin 2021/42**

(21) Application number: **19897109.5**

(22) Date of filing: **06.12.2019**

(51) Int Cl.:
***B28C 7/16*** *(2006.01)* ***C09K 3/00*** *(2006.01)*
***D21H 11/18*** *(2006.01)* ***D21H 11/20*** *(2006.01)*

(86) International application number:
**PCT/JP2019/047748**

(87) International publication number:
**WO 2020/121952 (18.06.2020 Gazette 2020/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **11.12.2018 JP 2018232042**
**28.12.2018 JP 2018247161**
**27.03.2019 JP 2019061348**

(71) Applicant: **Oji Holdings Corporation**
**Chuo-ku**
**Tokyo 104-0061 (JP)**

(72) Inventors:
- **TANAKA, Rina**
  **Tokyo 104-0061 (JP)**
- **TSUTSUMI, Yoshiyuki**
  **Tokyo 104-0061 (JP)**
- **YAMAMOTO, Hiroki**
  **Tokyo 104-0061 (JP)**

(74) Representative: **Godemeyer Blum Lenze**
**Patentanwälte**
**Partnerschaft mbB - werkpatent**
**An den Gärten 7**
**51491 Overath (DE)**

(54) **FIBROUS CELLULOSE**

(57) Provided is fibrous cellulose used for producing a concrete-pump pressure-feeding primer containing calcium carbonate powder, which is excellent in a dispersion stability and a pressure-feeding property. The fibrous cellulose is used for producing the concrete-pump pressure-feeding primer through mixing with the calcium carbonate powder. The fibrous cellulose contains ultrafine fibrous modified cellulose which has an ionic group and has a fiber width of 1,000 nm or less.

[Fig. 1]

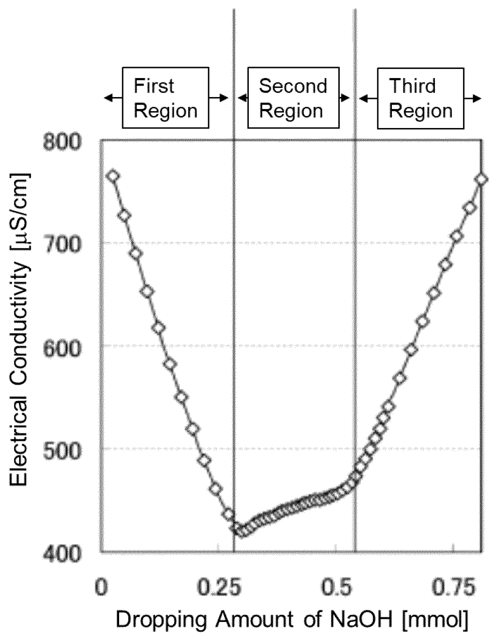


EP 3 895 865 A1

## Description

TECHNICAL FIELD

The present invention relates to fibrous cellulose, particularly, fibrous cellulose used for producing a concrete pump pressure-feeding primer through mixing with calcium carbonate powder.

BACKGROUND ART

In a foundation work of buildings or in a construction work of concrete buildings, a work of placing concrete into a predetermined site is carried out.

In recent years, a method of transporting concrete supplied to a hopper to a predetermined placement site by using a concrete pump truck has been widely employed. In this method, concrete within the hopper is pressure-fed into a pipe by using the concrete pump truck, and the concrete is transported to a target placement site through the pipe. Then, when the concrete is pressure-fed by using the concrete pump and the pipe, cement paste or mortar obtained by mixing water with cement as a pressure-feeding primer is filled in advance in the hopper, as a pressure-feeding primer, and this pressure-feeding primer is sent into the pipe first, and then, while ready-mixed concrete is poured into the hopper, the ready-mixed concrete is continuously sent into the pipe and pressure-fed. In this manner, the pressure-feeding primer is sent first. This is because when unhardened ready-mixed concrete (fluid concrete) which has not been subjected to any treatment is introduced, only a mortar content (cement paste) among constituent components of the concrete may adhere to the surface inside the pump or the pipe, and accordingly, a leading end portion of the concrete whose mortar content is lost may be gradually separated and may block the pipe.

In a method of using the cement paste or the mortar as the pressure-feeding primer, the hardening reaction is progressed during transportation or during waiting at a concrete placement site. Thus, it is necessary to make a detailed management plan of a concrete placing work. In addition, in this method, it is required to set a large amount of cement paste or mortar in use as the pressure-feeding primer in order to obtain its required effect, and also it is required to discard the cement paste or the mortar that has been used as the pressure-feeding primer. Thus, not only the economic efficiency is insufficient, but also the cement paste or the mortar is highly likely to adversely affect the quality of the concrete.

PTL 1 discloses a water-absorbent resin-containing pressure-feeding initiator for a concrete pump for the purpose of realizing the pressure-feeding initiator for the concrete pump in which pressure-feeding of concrete can be smoothly started with a small amount of use.

CITATION LIST

PATENT LITERATURE

PTL 1: JP 2000-034461 A

SUMMARY OF INVENTION

TECHNICAL PROBLEM

The pressure-feeding primer described in PTL 1 is inferior in economic efficiency due to use of a water-absorbent resin, and also has a problem in that water absorption of the water-absorbent resin is not sufficiently performed depending on conditions of use.

An object of the present invention is to provide fibrous cellulose used for producing a concrete-pump pressure-feeding primer containing calcium carbonate powder, in which a dispersion stability and a pressure-feeding property are excellent.

SOLUTION TO PROBLEM

The present inventors have found that the above-mentioned problems are solved by employing fibrous cellulose that contains ultrafine fibrous modified cellulose substituted with an ionic group and having a fiber width of 1,000 nm or less.

That is, the present invention relates to following <1> to <10>.

<1> Fibrous cellulose used for producing a concrete pump pressure-feeding primer through mixing with calcium carbonate powder, wherein the fibrous cellulose contains ultrafine fibrous modified cellulose which has an ionic

group and has a fiber width of 1,000 nm or less.

<2> The fibrous cellulose described in <1>, the fibrous cellulose further contains at least one selected from the group consisting of pulp fibers having a fiber width of 10 μm or more and ultrafine fibrous cellulose having a fiber width of 1,000 nm or less and having no ionic group.

<3> The fibrous cellulose described in <2>, the fibrous cellulose contains the pulp fibers having a fiber width of 10 μm or more, and a mass ratio of the pulp fibers to the ultrafine fibrous modified cellulose (pulp fibers/ultrafine fibrous modified cellulose) is 30/70 to 90/10.

<4> The fibrous cellulose described in <2>, the fibrous cellulose contains the ultrafine fibrous cellulose having no ionic group, and a mass ratio of the ultrafine fibrous cellulose containing no ionic group to the ultrafine fibrous modified cellulose (ultrafine fibrous cellulose containing no ionic group /ultrafine fibrous modified cellulose) is 30/70 to 90/10.

<5> The fibrous cellulose described in any one of <1> to <4>, a viscosity of the fibrous cellulose (a dispersion liquid with a solid content concentration of 0.4%, 23°C) is 500 mPa·s or more.

<6> The fibrous cellulose described in any one of <1> to <5>, a thixotropic index (TI value) of the fibrous cellulose, which is represented by the following formula (1), is 30 or more;

$$\text{TI value}=(\text{viscosity at a shear rate of } 1/\text{s})/(\text{viscosity at a shear rate of } 1{,}000/\text{s}) \qquad (1)$$

wherein the viscosity is a viscosity of a dispersion liquid with a solid content concentration of 0.4%, at 23°C.

<7> The fibrous cellulose described in any one of <1> to <6>, a content of the calcium carbonate powder in a solid content of the concrete pump pressure-feeding primer is 50% by mass or more.

<8> The fibrous cellulose described in any one of <1> to <7>, an amount of the fibrous cellulose mixed with 100 parts by mass of the calcium carbonate powder is 0.0001 parts by mass or more and 100 parts by mass or less.

<9> The fibrous cellulose described in any one of <1> to <8>, the calcium carbonate powder contains porous calcium carbonate powder.

<10> The fibrous cellulose described in any one of <1> to <9>, which is further mixed with at least one selected from a pigment, an antioxidant, and a pH adjuster.

ADVANTAGEOUS EFFECTS OF INVENTION

According to the present invention, it is possible to provide fibrous cellulose used for producing a concrete-pump pressure-feeding primer containing calcium carbonate powder, in which a dispersion stability and a pressure-feeding property are excellent.

BRIEF DESCRIPTION OF DRAWINGS

Fig. 1 is a graph illustrating the relationship between the electrical conductivity and the amount of NaOH added dropwise to fibrous cellulose having a phosphoric acid group;

Fig. 2 is a graph illustrating the relationship between pH and the amount of NaOH added dropwise to a fibrous cellulose-containing slurry having a phosphorus oxoacid group;

Fig. 3 is a graph illustrating the relationship between the electrical conductivity and the amount of NaOH added dropwise to fibrous cellulose having a carboxy group; and

Fig. 4 is a graph illustrating the relationship between pH and the amount of NaOH added dropwise to a fibrous cellulose-containing slurry having a carboxy group.

DESCRIPTION OF EMBODIMENTS

[Fibrous Cellulose]

Fibrous cellulose of the present invention is used for producing a concrete-pump pressure-feeding primer through mixing with calcium carbonate powder. The fibrous cellulose contains ultrafine fibrous modified cellulose which has an ionic group and has a fiber width of 1,000 nm or less (hereinafter, also simply referred to as "ultrafine fibrous modified cellulose" or "modified CNF"). In addition, it is desirable that the fibrous cellulose contains not only the modified

CNF, but also at least one selected from the group consisting of pulp fibers having a fiber width of 10 μm or more (hereinafter, also simply referred to as "pulp fibers") and ultrafine fibrous cellulose having a fiber width of 1,000 nm or less and having no ionic group (hereinafter, also referred to as "ultrafine fibrous unmodified cellulose" or "unmodified CNF"). The ultrafine fibrous modified cellulose and the ultrafine fibrous unmodified cellulose are also collectively referred to as "ultrafine fibrous cellulose."

When the fibrous cellulose of the present invention is added to a pressure-feeding primer containing calcium carbonate, a concrete-pump pressure-feeding primer (hereinafter, also referred to as a "pressure-feeding primer" or a "primer") excellent in the dispersion stability and excellent in the pressure-feeding property is obtained. In addition, when the fibrous cellulose further contains at least one selected from the group consisting of pulp fibers and unmodified CNF, in the case where the corresponding fibrous cellulose is used as a dispersion liquid, due to a low viscosity of the dispersion liquid, the fibrous cellulose may have an excellent handleability during use.

The detailed reason the effect is obtained is unclear, but some are presumed as follows.

The fibrous cellulose containing the ultrafine fibrous modified cellulose (modified CNF) is formed into slurry with addition of water, and then exhibits a high viscosity thickening effect and a high particle dispersion effect. Meanwhile, the corresponding slurry has thixotropy, and thus its viscosity is reduced when shear stress is applied.

It may be thought that when the fibrous cellulose of the present invention is mixed with calcium carbonate to obtain a concrete-pump pressure-feeding primer, in the case of actual pressure-feeding of the primer into a pipe, since the pressure-feeding primer contains water, a high dispersion stability is given to calcium carbonate, and an excellent pressure-feeding property is obtained. In particular, it may be thought that since the ultrafine fibrous cellulose has ionic groups, a high dispersion stability for calcium carbonate, and an excellent pressure-feeding property are obtained.

In addition, in actual use, from the viewpoint of preparing a uniform pressure-feeding primer, and from the viewpoint of shortening a preparation time, it is desirable that the fibrous cellulose of the present invention is not added in a solid or powder state, but is added as a dispersion liquid. The viscosity of a dispersion liquid containing the modified CNF tends to be higher than the viscosity of a dispersion liquid containing only the pulp fibers or the unmodified CNF. It was found that when the fibrous cellulose of the present invention contains not only the modified CNF but also at least one selected from the group consisting of the pulp fibers and the unmodified CNF, although the reason is unknown, it is surprisingly possible to reduce the use amount of the modified CNF without impairing the dispersion stability or the pressure-feeding property. Accordingly, the viscosity of the dispersion liquid may be reduced, and thus fibrous cellulose excellent in the handleability in actual use is obtained.

Hereinafter, the present invention will be described in more detail.

<Ultrafine Fibrous Modified Cellulose>

The fibrous cellulose of the present invention contains ultrafine fibrous modified cellulose (modified CNF), and the corresponding ultrafine fibrous modified cellulose is fibrous cellulose having a fiber width of 1,000 nm or less and also is substituted with an ionic group (has an ionic group). The fiber widths of the fibrous cellulose and the ultrafine fibrous modified cellulose can be measured by, for example, observation with an electron microscope.

The fiber width of the modified CNF is preferably 100 nm or less, more preferably 30 nm or less, further preferably 8 nm or less. In addition, the fiber width is preferably 2 nm or more.

The average fiber width of the modified CNF is, for example, 1,000 nm or less. The average fiber width of the modified CNF is preferably, for example, 2 nm or more and 1,000 nm or less, more preferably 2 nm or more and 100 nm or less, further preferably 2 nm or more and 50 nm or less, particularly preferably 2 nm or more and 10 nm or less. When the average fiber width of the modified CNF is set to 2 nm or more, the dissolution as a cellulose molecule in water may be suppressed, so that the effect of improvement in the dispersion stability and the pressure-feeding property due to the modified CNF can be more easily exhibited. The modified CNF is, for example, single fibrous cellulose.

The average fiber width of the modified CNF is measured by using, for example, an electron microscope in the following manner. First, an aqueous suspension of modified CNF with a concentration of 0.05% by mass or more and 0.1% by mass or less is prepared, and the suspension is cast on a hydrophilized carbon film-coated grid to obtain a sample for TEM observation. When fibers with a wide width are included, an SEM image of the surface cast on glass may be observed. Then, observation is performed through an electron microscope image at any of magnifications of $\times$ 1,000, $\times$5,000, $\times$ 10,000 and $\times$50,000 according to the width of fibers to be observed. However, the sample, the observation conditions, and the magnification are adjusted to satisfy the following conditions.

(1) one straight line X is drawn at an arbitrary position within an observation image, and 20 or more fibers intersect the corresponding straight line X.

(2) a straight line Y perpendicularly intersecting the corresponding straight line is drawn within the same image, and 20 or more fibers intersect the corresponding straight line Y.

In regard to the observation images satisfying the above-mentioned conditions, widths of fibers intersecting the straight lines X or the straight lines Y are visually read. In this manner, three or more sets of observation images on at least surface portions that do not overlap each other are obtained. Next, for each image, widths of fibers intersecting the straight line X or the straight line Y are read. Accordingly, at least 120 (=20×2×3) fiber widths are read. Then, the average value of the read fiber widths is set as an average fiber width of the modified CNF.

The fiber length of the modified CNF is not particularly limited, but is preferably, for example, 0.1 μm or more and 1,000 μm or less, more preferably 0.1 μm or more and 800 μm or less, further preferably 0.1 μm or more and 600 μm or less. When the fiber length is set within the range, destruction of a crystal region of the modified CNF may be suppressed. In addition, it is also possible to set the slurry viscosity of the modified CNF within an appropriate range. The fiber length of the modified CNF may be obtained through, for example, image analysis by TEM, SEM, or AFM.

It is desirable that the modified CNF has an I-type crystal structure. Here, the fact that the modified CNF has the I-type crystal structure may be identified in a diffraction profile obtained from a wide-angle X-ray diffraction photograph using CuKα (λ=1.5418A) monochromatized with graphite. Specifically, identification may be made from typical peaks present at two positions around 2θ=14° or more and 17° or less and around 2θ=22° or more and 23° or less.

The occupying ratio of the I-type crystal structure in the modified CNF is preferably, for example, 30% or more, more preferably 40% or more, further preferably 50% or more. Accordingly, a more excellent performance may be expected in terms of the dispersion stability and the pressure-feeding property. The degree of crystallinity may be obtained from a pattern in measurement of an X-ray diffraction profile, through a general method (Seagal et al, Textile Research Journal, vol 29, p 786, 1959).

The axial ratio (fiber length/fiber width) of the modified CNF is not particularly limited, but is preferably, for example, 20 or more and 10,000 or less, more preferably 50 or more and 1,000 or less. By setting the axial ratio to the lower limit value or more, it is easy to obtain a high dispersion stability of calcium carbonate powder, and it is easy to obtain a sufficient viscosity thickening property when water dispersion of the modified CNF is produced. Setting the axial ratio to the upper limit value or less is preferable because, for example, handling such as dilution becomes easy when the fibrous cellulose is treated as an aqueous dispersion liquid.

The modified CNF in the present embodiment has, for example, both a crystalline region and a non-crystalline region. In particular, the modified CNF that has both a crystalline region and a non-crystalline region, and has a high axial ratio is realized by an ultrafine fibrous modified cellulose production method to be described below.

The modified CNF in the present embodiment has an ionic group. When the modified CNF has an ionic group, the dispersibility of fibers in a dispersion medium (water) is improved so that the defibration efficiency in a defibration treatment may be increased. In addition, the production of a concrete-pump pressure-feeding primer through mixing with the calcium carbonate powder improves the dispersibility of calcium carbonate in water and contributes to improvement of the pressure-feeding property.

The ionic group includes, for example, either or both of an anionic group and a cationic group. In the present embodiment, it is particularly preferable to have the anionic group as the ionic group.

In addition, in the modified CNF, a non-ionic group may be introduced in addition to the ionic group. Examples of the non-ionic group include an alkyl group and an acyl group.

The anionic group as the ionic group is preferably, for example, at least one type selected from a phosphorus oxoacid group or a group derived from the phosphorus oxoacid group (also simply referred to as a phosphorus oxoacid group), a carboxy group or a group derived from the carboxy group (also simply referred to as a carboxy group), and a sulfone group or a group derived from the sulfone group (also simply referred to as a sulfone group), more preferably at least one type selected from a phosphorus oxoacid group and a carboxy group, particularly preferably a phosphorus oxoacid group.

The phosphorus oxoacid group or the group derived from the phosphorus oxoacid group is, for example, a group represented by the following formula (1), and is generalized as a phosphorus oxoacid group or a phosphorus oxoacid-derived group.

The phosphorus oxoacid group is, for example, a divalent functional group corresponding to one obtained by removing a hydroxy group from phosphorus oxoacid, and is specifically a group represented by $-PO_3H_2$. The group derived from the phosphorus oxoacid group includes a group such as a salt of the phosphorus oxoacid group, and a phosphorus oxoacid ester group. The group derived from the phosphorus oxoacid group may be contained in the modified CNF, as a group in which the phosphoric acid group is condensed (for example, a pyrophosphoric acid group). In addition, the phosphorus oxoacid group may be, for example, a phosphorous acid group (a phosphonate group), and the group derived from the phosphorus oxoacid group may be a salt of the phosphorous acid group, a phosphorous acid ester group or the like.

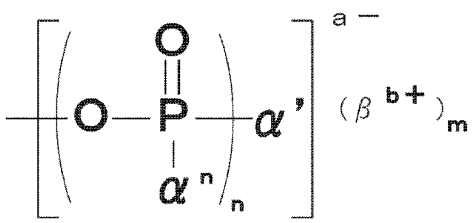

(1)

In the formula (1), "a", "b" and "n" are natural numbers and "m" is an arbitrary number (in which "a"="b"×"m"). "a" items of $\alpha^1$, $\alpha^2$, ..., $\alpha^n$ and $\alpha'$ are O , and the rest are either R or OR. Each or all of $\alpha^n$ and $\alpha'$ may be $O^-$. Each R is a hydrogen atom, a saturated-linear hydrocarbon group, a saturated-branched hydrocarbon group, a saturated-cyclic hydrocarbon group, an unsaturated-linear hydrocarbon group, an unsaturated-branched hydrocarbon group, an unsaturated-cyclic hydrocarbon group, an aromatic group, or groups derived therefrom. In addition, in the formula (1), $\alpha$ may be a group derived from a cellulose molecular chain.

Examples of the saturated-linear hydrocarbon group include a methyl group, an ethyl group, an n-propyl group, and an n-butyl group, but are not particularly limited. Examples of the saturated-branched hydrocarbon group include an i-propyl group and a t-butyl group, but are not particularly limited. Examples of the saturated-cyclic hydrocarbon group include a cyclopentyl group and a cyclohexyl group, but are not particularly limited. Examples of the unsaturated-linear hydrocarbon group include a vinyl group and an allyl group, but are not particularly limited. Examples of the unsaturated-branched hydrocarbon group include an i-propenyl group and a 3-butenyl group, but are not particularly limited. Examples of the unsaturated-cyclic hydrocarbon group include a cyclopentenyl group and a cyclohexenyl group, but are not particularly limited. Examples of the aromatic group include a phenyl group and a naphthyl group, but are not particularly limited.

In addition, examples of the derived group in R include functional groups in which at least one type of functional groups such as a carboxy group, a hydroxy group, and an amino group is added or substituted in the main chain or the side chain of the above-mentioned various hydrocarbon groups, but are not particularly limited. In addition, the number of carbon atoms constituting the main chain of R is not particularly limited, but is preferably 20 or less, more preferably 10 or less. When the number of carbon atoms constituting the main chain of R is set within the range, the molecular weight of the phosphorus oxoacid group may be set within an appropriate range, so that penetration into a fiber raw material may be facilitated, and the yield of the modified CNF may be increased.

$\beta^{b+}$ is a monovalent or higher cation composed of an organic substance or an inorganic substance. Examples of the monovalent or higher cation composed of the organic substance include aliphatic ammonium and aromatic ammonium, and examples of the monovalent or higher cation composed of the inorganic substance include ions of alkali metals such as sodium, potassium, or lithium, cations of divalent metals such as calcium or magnesium, and hydrogen ions, but are not particularly limited. For these, one type or a combination of two or more types may be applied. The monovalent or higher cation composed of the organic substance or the inorganic substance is preferably an ion of sodium or potassium which is hardly yellowed when the fiber raw material containing $\beta$ is heated, and is easily industrially used, but is not particularly limited.

The amount of ionic groups introduced into the modified CNF is preferably, for example, 0.10 mmol/g or more per 1 g (mass) of the modified CNF, more preferably 0.20 mmol/g or more, further preferably 0.50 mmol/g or more, still more preferably 1.00 mmol/g or more. In addition, the amount of the ionic groups introduced into the modified CNF is preferably, for example, 5.20 mmol/g or less per 1 g (mass) of the modified CNF, more preferably 3.65 mmol/g or less, further preferably 3.50 mmol/g or less, still more preferably 3.00 mmol/g or less. When the introduction amount of the ionic groups is set within the range, it is possible to facilitate the micronizing of the fiber raw material, and to increase the stability of the modified CNF. In addition, when the introduction amount of the ionic groups is set within the range, the fibrous cellulose containing the modified CNF can exhibit good characteristics in improving the dispersion stability or the pressure-feeding property.

Here, the denominator in the unit mmol/g indicates the mass of the modified CNF when the counterion of the ionic group is a hydrogen ion ($H^+$).

The amount of the ionic groups introduced into the fibrous cellulose may be measured by, for example, a conductivity titration method. In the measurement using the conductivity titration method, while alkali such as a sodium hydroxide aqueous solution is added to the obtained fibrous cellulose-containing slurry, a change in the conductivity is determined so that the introduction amount is measured.

Fig. 1 is a graph illustrating the relationship between the electrical conductivity and the amount of NaOH added dropwise to fibrous cellulose having a phosphoric acid group.

For example, the amount of phosphoric acid groups introduced into the fibrous cellulose is measured as follows. The following measurement method is not limited to the modified CNF, and is similarly applied to measurement on ionic group-introduced fibers during production of the modified CNF, or ionic group-introduced pulp fibers.

First, a fibrous cellulose-containing slurry is treated with a strong acid ion exchanged resin. As necessary, before the treatment with the strong acid ion exchanged resin, the same defibration treatment as a defibration treatment step to be described below may be performed on a measurement target. Next, the change in the electrical conductivity is observed while a sodium hydroxide aqueous solution is added, so that a titration curve illustrated in Fig. 1 is obtained. As illustrated in Fig. 1, first, the electrical conductivity is sharply reduced (hereinafter, referred to as a "first region"). Then, the conductivity begins to slightly increase (hereinafter, referred to as a "second region"). Next, the increment of the conductivity increases (hereinafter, referred to as a "third region"). A boundary point between the second region and the third region is defined by a point at which a second differential value of the conductivity, that is, a change amount of the increment (gradient) of the conductivity, is maximized. In this manner, on the titration curve, three regions appear. Among them, the amount of required alkali for the first region is equal to the amount of strong acid groups in the slurry used for titration, and the amount of required alkali for the second region is equal to the amount of weak acid groups in the slurry used for titration. When the phosphoric acid group causes condensation, the weak acid groups are apparently lost, and the amount of required alkali for the second region is smaller than the amount of required alkali for the first region. Meanwhile, the amount of strong acid groups is equal to the amount of phosphorus atoms regardless of the presence/absence of condensation. Thus, simple description as the introduction amount of the phosphoric acid groups (or the amount of the phosphoric acid groups) or the introduction amount of the substituents (or the amount of the substituents) refers to the amount of the strong acid groups. Therefore, a value obtained by dividing the amount of required alkali (mmol) for the first region on the obtained titration curve by the solid content (g) in the slurry as a titration target becomes an introduction amount of the phosphoric acid groups (mmol/g).

In addition, the amount of the ionic groups introduced into the modified CNF may be measured by, for example, a neutralization titration method. In the measurement using the neutralization titration method, while alkali such as a sodium hydroxide aqueous solution is added to the obtained modified CNF-containing slurry, a change in pH is determined so that the introduction amount is measured.

Fig. 2 is a graph illustrating the relationship between pH and the amount of NaOH added dropwise to a fibrous cellulose-containing slurry having a phosphorus oxoacid group. For example, the amount of phosphorus oxoacid groups introduced into the modified CNF is measured as follows. In the following description, descriptions will be made on a measurement method on the modified CNF, but the same also applies to measurement on ionic group-introduced fibers during production of the modified CNF, or ionic group-introduced pulp fibers.

First, a modified CNF-containing slurry is treated with a strong acid ion-exchange resin. As necessary, before the treatment with the strong acid ion-exchange resin, the same defibration treatment as a defibration treatment step to be described below may be performed on a measurement target.

Next, the change in pH is observed while a sodium hydroxide aqueous solution is added, so that a titration curve illustrated in the upper part of Fig. 2 is obtained. On the titration curve illustrated in the upper part of Fig. 2, a measured pH is plotted relative to the addition amount of alkali, and on a titration curve illustrated in the lower part of Fig. 2, a pH increment (differential value) (1/mmol) is plotted relative to the addition amount of alkali. In this neutralization titration, on the curve plotting the measured pH relative to the addition amount of alkali, two points at which the increment (a differential value of pH relative to a dropping amount of alkali) is maximized are confirmed. Between these, a firstly obtained maximum point of the increment when addition of alkali is initiated is called a first end point, and a secondly obtained maximum point of the increment is called a second end point. The amount of required alkali from the start of titration to the first end point is equal to a first dissociated acid amount of the modified CNF contained in the slurry used for the titration, the amount of required alkali from the first end point to the second end point is equal to a second dissociated acid amount of the modified CNF contained in the slurry used for the titration, and the amount of required alkali from the start of titration to the second end point is equal to the total dissociated acid amount of the modified CNF contained in the slurry used for the titration. Then, a value obtained by dividing the amount of required alkali from the start of titration to the first end point by the solid content (g) in the slurry as a titration target becomes an introduction amount of the phosphorus oxoacid groups (mmol/g). Simple expression as the introduction amount of the phosphorus oxoacid groups (or the amount of the phosphorus oxoacid groups) means the first dissociated acid amount.

In Fig. 2, a region from the start of titration to the first end point is called a first region, and a region from the first end point to the second end point is called a second region. For example, when the phosphorus oxoacid group is a phosphoric acid group, and the phosphoric acid group causes condensation, apparently, the amount of weak acid groups (also referred to as a second dissociated acid amount in this specification) in the phosphorus oxoacid group is decreased, and the amount of alkali required for the second region is smaller than the amount of alkali required for the first region. Meanwhile, the amount of strong acid groups (also referred to as a first dissociated acid amount in this specification) in the phosphorus oxoacid group is the same as the amount of phosphorus atoms regardless of the presence/absence of condensation. In addition, when the phosphorus oxoacid group is a phosphorous acid group, since there is no weak acid group in the phosphorus oxoacid group, the amount of alkali required for the second region may be decreased or the amount of alkali required for the second region may be zero in some cases. In this case, on the titration curve, there is one point at which a pH increment is maximized.

In the measurement of the amount of the phosphorus oxoacid groups through the titration method, if the dropping amount of one drop of the sodium hydroxide aqueous solution is too large, or if the titration interval is too short, the amount of the phosphorus oxoacid groups may be smaller than originally intended, that is, an accurate value may not be obtained. For an appropriate dropping amount, and a titration interval, for example, it is desirable to titrate 10 to 50 μL of a 0.1 N sodium hydroxide aqueous solution every 5 to 30 seconds. In addition, in order to eliminate the influence of carbon dioxide dissolved in the modified CNF-containing slurry, for example, it is desirable to perform measurement while blowing inert gas such as nitrogen gas to the slurry from 15 min before the start of titration to the end of titration.

The above-described introduction amount of the phosphorus oxoacid groups (mmol/g) indicates the amount of the phosphorus oxoacid groups included in acid-type fibrous cellulose (hereinafter, referred to as the amount of the phosphorus oxoacid groups (acid type)) because the denominator indicates the mass of the acid-type fibrous cellulose. Meanwhile, when the counterion of the phosphorus oxoacid group is replaced with any cation C so as to have a charge equivalent, the denominator may be converted into the mass of fibrous cellulose in which the corresponding cation C is a counterion so that it is possible to obtain the amount of the phosphorus oxoacid groups included in the modified CNF fibrous cellulose in which the cation C is a counterion (hereinafter, the amount of the phosphorus oxoacid groups (C type)).

That is, calculation is performed by the following calculation formula.

$$\text{Amount of phosphorus oxoacid groups (C type)} = \text{amount of phosphorus oxoacid groups (acid type)}/\{1+(W-1)\times A/1{,}000\}$$

A[mmol/g]: the total amount of anions derived from phosphorus oxoacid groups included in fibrous cellulose (the sum of the amount of strong acid groups and the amount of weak acid groups in the phosphorus oxoacid groups (the total dissociated acid amount of phosphorus oxoacid groups))

W: formula weight of cation C per valence (for example, Na is 23, and Al is 9)

Fig. 3 is a graph illustrating the relationship between the electrical conductivity and the amount of NaOH added dropwise to fibrous cellulose having a carboxy group.

For example, the amount of carboxy groups introduced into the fibrous cellulose is measured as follows. The following measurement method is not limited to the modified CNF, and is similarly applied to measurement on ionic group-introduced fibers during production of the modified CNF, or ionic group-introduced pulp fibers.

First, a fibrous cellulose-containing slurry is treated with a strong acid ion-exchanged resin. As necessary, before the treatment with the strong acid ion-exchanged resin, the same defibration treatment as a defibration treatment step to be described below may be performed on a measurement target. Next, the change in the electrical conductivity is observed while a sodium hydroxide aqueous solution is added, so that a titration curve illustrated in Fig. 3 is obtained. As necessary, the same defibration treatment as the defibration treatment step to be described below may be performed on the measurement target. As illustrated in Fig. 3, the titration curve is divided into a first region where the increment (gradient) of the conductivity becomes almost constant after the electrical conductivity is reduced, and thereafter, a second region where the increment (gradient) of the conductivity is increased. A boundary point between the first region and the second region is defined by a point at which a second differential value of the conductivity, that is, a change amount of the increment (gradient) of the conductivity is maximized. Then, a value obtained by dividing the amount of required alkali (mmol) for the first region on the titration curve by the solid content (g) in the fibrous cellulose-containing slurry as a titration target becomes an introduction amount of the carboxy groups (mmol/g).

Fig. 4 is a graph illustrating the relationship between pH and the amount of NaOH added dropwise to a fibrous cellulose-containing slurry having a carboxy group.

For example, the amount of carboxy groups introduced into the modified CNF is measured as follows. In the following description, descriptions will be made on a measurement method on the modified CNF, but the same also applies to measurement on ionic group-introduced fibers during production of the modified CNF, or ionic group-introduced pulp fibers.

First, a modified CNF-containing slurry is treated with a strong acid ion-exchange resin. As necessary, before the treatment with the strong acid ion-exchange resin, the same defibration treatment as the defibration treatment step to be described below may be performed on a measurement target. Next, the change in pH is observed while a sodium hydroxide aqueous solution is added, so that a titration curve illustrated in Fig. 4 is obtained. As necessary, the same defibration treatment as the defibration treatment step to be described below may be performed on a measurement target.

As illustrated in Fig. 4, in this neutralization titration, on the curve plotting the measured pH relative to the addition amount of alkali, one point at which the increment (a differential value of pH relative to a dropping amount of alkali) is maximized is observed. This maximum point of the increment is called a first end point. Here, in Fig. 4, a region from the start of titration to the first end point is called a first region. The amount of alkali required for the first region is

equal to the amount of the carboxy groups in the slurry used for titration. Then, an introduction amount of the carboxy groups (mmol/g) is calculated by dividing the amount of alkali (mmol) required for the first region on the titration curve by the solid content (g) in the modified CNF-containing slurry as a titration target.

In the measurement of the amount of substituents through the titration method, if the titration interval of the sodium hydroxide aqueous solution is too short, the amount of the substituents may be smaller than originally intended. Thus, it is desirable to titrate 10 to 50 μL of a 0.1 N sodium hydroxide aqueous solution at an appropriate titration interval, for example, every 5 to 30 seconds.

The above-described introduction amount of the carboxy groups (mmol/g) indicates the amount of the carboxy groups included in acid-type fibrous cellulose (hereinafter, referred to as the amount of the carboxy groups (acid type)) because the denominator is the mass of the acid-type fibrous cellulose. Meanwhile, when the counterion of the carboxy group is replaced with an arbitrary cation C so as to have a charge equivalent, the denominator may be converted into the mass of fibrous cellulose in which the corresponding cation C is a counterion so that it is possible to obtain the amount of the carboxy groups included in the fibrous cellulose in which the cation C is a counterion (hereinafter, the amount of the carboxy groups (C type)).

That is, calculation is performed by the following calculation formula.

$$\text{Amount of carboxy groups (C type)} = \text{amount of carboxy groups (acid type)}/\{1+(W-1)\times(\text{amount of carboxy groups (acid type)})/1{,}000\}$$

W: formula weight of cation C per valence (for example, Na is 23, and Al is 9)

<Ultrafine Fibrous Unmodified Cellulose>

The fibrous cellulose of the present invention may further contain at least one selected from pulp fibers and unmodified CNF, in addition to the above-described modified CNF.

Preferable ranges of the fiber width, the average fiber width, the fiber length, the crystal structure, and the axial ratio of the unmodified CNF are equal to preferable ranges of the fiber width, the average fiber width, the fiber length, the crystal structure, and the axial ratio of the modified CNF, respectively. In addition, measurement is carried out by the same method as that for the modified CNF.

<Production Method of Ultrafine Fibrous Modified Cellulose and Ultrafine Fibrous Unmodified Cellulose>

(Cellulose-Containing Fiber Raw Material)

The modified CNF and the unmodified CNF (also collectively referred to as ultrafine fibrous cellulose) are produced from a cellulose-containing fiber raw material.

The cellulose-containing fiber raw material is not particularly limited, but pulp is preferably used because it is easily available and inexpensive. Examples of the pulp include wood pulp, non-wood pulp, and deinked pulp. The wood pulp is not particularly limited, but examples thereof include chemical pulps such as broad leaved tree kraft pulp (LBKP), needle leaved tree kraft pulp (NBKP), sulfite pulp (SP), dissolving pulp (DP), soda pulp (AP), unbleached kraft pulp (UKP) and oxygen bleached kraft pulp (OKP), semi-chemical pulps such as semi-chemical pulp (SCP) and chemigroundwood pulp (CGP), and mechanical pulps such as ground wood pulp (GP) and thermo-mechanical pulp (TMP, BCTMP). The non-wood pulp is not particularly limited, but examples thereof include cotton-based pulps such as cotton linter and cotton lint, and non-wood-based pulps such as hemp, straw, bamboo, and bagasse. The deinked pulp is not particularly limited, but examples thereof include deinked pulp whose raw material is used paper. For the pulp in the present embodiment, one of the types may be used alone, or two or more types may be mixed and used.

Among the pulps, from the viewpoint of ease of availability, for example, wood pulp and deinked pulp are preferable. In addition, among the wood pulps, from the viewpoint of a high cellulose ratio and a high yield of ultrafine fibrous cellulose during a defibration treatment, or from the viewpoint of obtaining ultrafine fibrous cellulose of long fibers with a high axial ratio, in which decomposition of cellulose in pulp is low, for example, chemical pulp is more preferable, and kraft pulp and sulfite pulp are further preferable. When the ultrafine fibrous modified cellulose of long fibers with a high axial ratio is used, the viscosity of the slurry containing the ultrafine fibrous modified cellulose tends to be increased.

Examples of the cellulose-containing fiber raw material include cellulose contained in ascidians or bacteria cellulose produced by acetic acid bacteria. In addition, instead of the cellulose-containing fiber raw material, fibers formed by linear nitrogen-containing polysaccharide polymers such as chitin and chitosan may also be used.

In order to obtain the above-described modified CNF in which an ionic group is introduced, it is desirable to

include an ionic group introducing step of introducing the ionic group into the above-described cellulose-containing fiber raw material, a washing step, an alkali treatment step (neutralization step), and a defibration treatment step in this order, and instead of the washing step, or in addition to the washing step, an acid treatment step may be included. The ionic group introducing step may be exemplified with a phosphorus oxoacid group introducing step and a carboxy group introducing step.

In addition, in order to obtain the ultrafine fibrous cellulose having no ionic group, the above-described cellulose-containing fiber raw material may be defibrated.

Hereinafter, each will be described.

(Ionic Group Introducing Step)

[Phosphorus Oxoacid Group Introducing Step]

The phosphorus oxoacid group introducing step is a step in which at least one type of compound selected from compounds capable of introducing a phosphorus oxoacid group by reacting with a hydroxy group included in the cellulose-containing fiber raw material (hereinafter, also referred to as a "compound A") is allowed to act on the cellulose-containing fiber raw material. Through this step, phosphorus oxoacid group-introduced fibers are obtained.

In the phosphorus oxoacid group introducing step according to the present embodiment, the reaction between the cellulose-containing fiber raw material and the compound A may be performed in the presence of at least one type (hereinafter, also referred to as a "compound B") selected from urea and its derivatives. Meanwhile, in a state where the compound B is not present, the reaction between the cellulose-containing fiber raw material and the compound A may be performed.

As an example of a method of allowing the compound A to act on the fiber raw material in the coexistence with the compound B, a method of mixing the compound A and the compound B with the fiber raw material in a dry state, a wet state or a slurry state may be exemplified. Among them, in terms of high uniformity of the reaction, it is preferable to use the fiber raw material in a dry state or a wet state, and it is particularly preferable to use the fiber raw material in a dry state. The form of the fiber raw material is not particularly limited, but is preferably, for example, cotton-like or thin sheet-like. A method may be exemplified in which each of the compound A and the compound B, in a powder state or in a state of a solution obtained through dissolution in a solvent or in a melted state made through heating to a melting point or higher, is added to the fiber raw material. Among them, in terms of high uniformity of the reaction, addition in a state of a solution obtained through dissolution in a solvent, in particular, in an aqueous solution state, is preferable. In addition, the compound A and the compound B may be added to the fiber raw material at the same time, may be individually separately added, or may be added as a mixture. The method of adding the compound A and the compound B is not particularly limited, but when the compound A and the compound B are in a solution state, the fiber raw material may be immersed in the solution to absorb the liquid and then may be taken out, or the solution may be added dropwise to the fiber raw material. In addition, required amounts of the compound A and the compound B may be added to the fiber raw material, or after excess amounts of the compound A and the compound B are separately added to the fiber raw material, the excess compound A and the compound B may be removed through pressing or filtering.

The compound A used in the present embodiment may be a compound that has a phosphorus atom and is capable of forming an ester bond with cellulose, and examples thereof include phosphoric acid or a salt thereof, phosphorous acid or a salt thereof, dehydrated condensed phosphoric acid or a salt thereof, and phosphoric anhydride (diphosphorus pentoxide), but are not particularly limited. As for the phosphoric acid, those having various purities may be used, and, examples thereof include 100% phosphoric acid (orthophosphoric acid) or 85% phosphoric acid. Examples of the phosphorous acid include 99% phosphorous acid (phosphonic acid). The dehydrated condensed phosphoric acid is obtained by condensing two or more molecules of the phosphoric acid through a dehydration reaction, and examples thereof include pyrophosphoric acid, and polyphosphoric acid. Examples of phosphate, phosphite, and dehydrated condensed phosphate include lithium salts, sodium salts, potassium salts, and ammonium salts of phosphoric acid, phosphorous acid or dehydrated condensed phosphoric acid, and these may have various degrees of neutralization.

Among them, from the viewpoint of easier improvement in the defibration efficiency in a defibration treatment step to be described below, a low cost and an ease of industrial application due to high introduction efficiency of the phosphorus oxoacid group, phosphoric acid, a sodium salt of phosphoric acid, a potassium salt of phosphoric acid, or an ammonium salt of phosphoric acid is preferable, and phosphoric acid, sodium dihydrogen phosphate, disodium hydrogen phosphate, or ammonium dihydrogen phosphate is more preferable.

The amount of the compound A added to the fiber raw material is not particularly limited, but, for example, in a case where the addition amount of the compound A is converted into a phosphorus atomic weight, the amount of phosphorus atoms added to the fiber raw material (absolute dry mass) is preferably 0.5% by mass or more and 100% by mass or less, more preferably 1% by mass or more and 50% by mass or less, further preferably 2% by mass or more and 30% by mass or less. When the amount of phosphorus atoms added to the fiber raw material is set within the range,

the yield of the ultrafine fibrous cellulose can be further improved. Meanwhile, when the amount of phosphorus atoms added to the fiber raw material is set to the upper limit value or less, a yield improving effect and a cost can be balanced.

As described above, the compound B used in the present embodiment is at least one type selected from urea and its derivatives. Examples of the compound B include urea, biuret, 1-phenylurea, 1-benzylurea, 1-methylurea, and 1-ethylurea.

From the viewpoint of improving the uniformity of a reaction, it is preferable to use the compound B as an aqueous solution. In addition, from the viewpoint of further improving the uniformity of a reaction, it is preferable to use an aqueous solution in which both the compound A and the compound B are dissolved.

The amount of the compound B added to the fiber raw material (absolute dry mass) is not particularly limited, but is preferably, for example, 1% by mass or more and 500% by mass or less, more preferably 10% by mass or more and 400% by mass or less, further preferably 100% by mass or more and 350% by mass or less.

In the reaction between the cellulose-containing fiber raw material and the compound A, in addition to the compound B, for example, amides or amines may be included in the reaction system. Examples of the amides include formamide, dimethylformamide, acetamide, and dimethylacetamide. Examples of the amines include methylamine, ethylamine, trimethylamine, triethylamine, monoethanolamine, diethanolamine, triethanolamine, pyridine, ethylenediamine, and hexamethylenediamine. Among them, especially, triethylamine is known to act as a good reaction catalyst.

In the phosphorus oxoacid group introducing step, it is desirable that after the compound A, etc. are added or mixed to/with the fiber raw material, a heat treatment is carried out on the corresponding fiber raw material. As for the heat treatment temperature, it is desirable to choose a temperature at which a thermal decomposition or a hydrolysis reaction of fibers can be suppressed while the phosphorus oxoacid group can be efficiently introduced. The heat treatment temperature is preferably, for example, 50°C or more and 300°C or less, more preferably 100°C or more and 250°C or less, further preferably 130°C or more and 200°C or less. In addition, for the heat treatment, devices having various heat media may be used, and examples thereof include a stirring drying device, a rotary drying device, a disk drying device, a roll-type heating device, a plate-type heating device, a fluidized bed drying device, an air flow drying device, a vacuum-drying device, an infrared heating device, a far-infrared heating device, a microwave heating device, a dielectric heat drying device.

In the heat treatment according to the present embodiment, it is possible to employ, for example, a method of performing heating after adding the compound A and the like to a thin sheet-like fiber raw material through a method such as impregnation, or a method of performing heating while kneading or stirring the fiber raw material and the compound A and the like by a kneader or the like. This makes it possible to suppress an unevenness of the concentration of the compound A and the like in the fiber raw material, and to more uniformly introduce the phosphorus oxoacid groups onto the surfaces of cellulose fibers included in the fiber raw material. It may be thought that this is because as the drying is performed, when water molecules move to the surface of the fiber raw material, the dissolved compound A and the like can be suppressed from being attracted to the water molecules by surface tension, and similarly moving to the surface of the fiber raw material (that is, unevenness of the concentration of the compound A is caused).

In addition, it is desirable that the heating device used for the heat treatment is, for example, a device capable of always discharging the water content retained by the slurry, and the water content produced according to a dehydration condensation (phosphate esterification) reaction between the compound A and a hydroxy group, etc. included in cellulose, etc. in the fiber raw material, to the outside of a device system. Examples of such a heating device include a blowing-type oven. By always discharging the water content within the device system, not only a hydrolysis reaction of a phosphoric acid ester bond, as a reverse reaction of phosphate esterification, can be suppressed, but also acid hydrolysis of a sugar chain within fibers can be suppressed. This makes it possible to obtain ultrafine fibrous cellulose with a high axial ratio.

The time for the heat treatment is preferably, for example, 1 sec or more and 300 min or less after the water content is substantially removed from the fiber raw material, more preferably 1 sec or more and 1,000 sec or less, further preferably 10 sec or more and 800 sec or less. In the present embodiment, when the heating temperature and the heating time are set within appropriate ranges, the introduction amount of the phosphorus oxoacid groups may be set within a preferable range.

The phosphorus oxoacid group introducing step only has to be performed at least once, but may be repeatedly performed twice or more. By performing the phosphorus oxoacid group introducing step twice or more, it is possible to introduce many phosphorus oxoacid groups into the fiber raw material. In the present embodiment, as an example of a preferred embodiment, there may be a case where the phosphorus oxoacid group introducing step is performed twice.

The amount of the phosphorus oxoacid groups in the fiber raw material is preferably, for example, 0.10 mmol/g or more per 1 g (mass) of the fibrous cellulose, more preferably 0.20 mmol/g or more, further preferably 0.50 mmol/g or more, particularly preferably 1.00 mmol/g or more. In addition, the amount of the phosphorus oxoacid groups introduced into the fiber raw material is preferably, for example, 5.20 mmol/g or less per 1 g (mass) of the fibrous cellulose, more preferably 3.65 mmol/g or less, further preferably 3.00 mmol/g or less. When the introduction amount of the phosphorus oxoacid groups is set within the range, it is possible to facilitate the micronizing of the fiber raw material and to increase the stability of the ultrafine fibrous modified cellulose.

[Carboxy Group Introducing Step]

The carboxy group introducing step is performed by subjecting the cellulose-containing fiber raw material to oxidation treatment such as ozone oxidation, oxidation using a Fenton method, or a TEMPO oxidation treatment, or treatment with a compound having a carboxylic acid-derived group or its derivative, or an acid anhydride of a compound having a carboxylic acid-derived group or its derivative.

The compound having the carboxylic acid-derived group is not particularly limited, but examples thereof include dicarboxylic acid compounds such as maleic acid, succinic acid, phthalic acid, fumaric acid, glutaric acid, adipic acid, and itaconic acid, or tricarboxylic acid compounds such as citric acid, and aconitic acid. In addition, the derivative of the compound having the carboxylic acid-derived group is not particularly limited, but examples thereof include imidization products of an acid anhydride of a compound having a carboxy group, and derivatives of an acid anhydride of a compound having a carboxy group. The imidization product of the acid anhydride of the compound having the carboxy group is not particularly limited, but examples thereof include imidization products of dicarboxylic acid compounds, such as maleimide, succinimide, and phthalimide.

The acid anhydride of the compound having the carboxylic acid-derived group is not particularly limited, but examples thereof include acid anhydrides of dicarboxylic acid compounds, such as maleic anhydride, succinic anhydride, phthalic anhydride, glutaric anhydride, adipic anhydride, and itaconic anhydride. In addition, the derivative of the acid anhydride of the compound having the carboxylic acid-derived group is not particularly limited, but examples thereof include those in which at least a part of hydrogen atoms of the acid anhydride of the compound having the carboxy group, such as dimethylmaleic anhydride, diethylmaleic anhydride, or diphenylmaleic anhydride, is substituted with a substituent such as an alkyl group or a phenyl group.

In the carboxy group introducing step, when the TEMPO oxidation treatment is performed, for example, it is desirable to perform the treatment under conditions where pH is 6 or more and 8 or less. Such a treatment is also called a neutral TEMPO oxidation treatment. The neutral TEMPO oxidation treatment may be performed by adding, for example, pulp as the fiber raw material, a nitroxy radical such as TEMPO (2,2,6,6-tetramethylpiperidine-1-oxyl) as a catalyst, and sodium hypochlorite as a sacrificial reagent, to sodium phosphate buffer (pH=6.8). Further, through coexistence with sodium chlorite, aldehyde generated in the oxidation process can be efficiently oxidized to a carboxy group.

In addition, in the TEMPO oxidation treatment, the treatment may be performed under conditions where pH is 10 or more and 11 or less. Such a treatment is also called an alkali TEMPO oxidation treatment. The alkali TEMPO oxidation treatment may be performed by adding, for example, a nitroxy radical such as TEMPO as a catalyst, sodium bromide as a co-catalyst, and sodium hypochlorite as an oxidant, to pulp as the fiber raw material.

The amount of carboxy groups introduced into the fiber raw material changes depending on the type of the substituent, and is preferably 0.10 mmol/g or more per 1 g (mass) of the fibrous cellulose, more preferably 0.20 mmol/g or more, further preferably 0.50 mmol/g or more, particularly preferably 0.90 mmol/g or more, for example, in a case where the carboxy groups are introduced through TEMPO oxidation. In addition, it is preferably 2.5 mmol/g or less, more preferably 2.20 mmol/g or less, further preferably 2.00 mmol/g or less. Otherwise, when the substituent is a carboxymethyl group, it may be 5.8 mmol/g or less per 1 g (mass) of the fibrous cellulose.

(Washing Step)

In the method of producing the ultrafine fibrous modified cellulose in the present embodiment, as necessary, a washing step may be performed on ionic group-introduced fibers. The washing step is performed by washing the ionic group-introduced fibers with, for example, water or an organic solvent. In addition, the washing step may be performed after each step to be described below, and the number of times washing is carried out in each washing step is not particularly limited.

(Alkali Treatment Step)

When the ultrafine fibrous modified cellulose is produced, an alkali treatment may be performed on the ionic group-introduced fibers between the ionic group introducing step and a defibration treatment step to be described below. The method for the alkali treatment is not particularly limited, but examples thereof include a method of immersing the ionic group-introduced fibers in an alkali solution.

An alkali compound contained in the alkali solution is not particularly limited, and may be an inorganic alkali compound or may be an organic alkali compound. In the present embodiment, it is desirable to use, for example, sodium hydroxide or potassium hydroxide as the alkali compound in terms of high versatility. In addition, a solvent contained in the alkali solution may be either water or an organic solvent. Among them, the solvent contained in the alkali solution is preferably a polar solvent, including water, or a polar organic solvent (for example, alcohol), more preferably an aqueous solvent including at least water. As the alkali solution, in terms of high versatility, for example, a sodium hydroxide

aqueous solution, or a potassium hydroxide aqueous solution is preferable.

The temperature of the alkali solution in the alkali treatment step is not particularly limited, but is preferably, for example, 5°C or more and 80°C or less, more preferably 10°C or more and 60°C or less. The immersion time of the ionic group-introduced fibers in the alkali solution in the alkali treatment step is not particularly limited, but is preferably, for example, 5 min or more and 30 min or less, more preferably 10 min or more and 20 min or less. The use amount of the alkali solution in the alkali treatment is not particularly limited, but is preferably, for example, 100% by mass or more and 100,000% by mass or less, more preferably 1,000% by mass or more and 10,000% by mass or less with respect to the absolute dry mass of the ionic group-introduced fibers.

In order to reduce the use amount of the alkali solution in the alkali treatment step, the ionic group-introduced fibers may be washed with water or an organic solvent after the ionic group introducing step before the alkali treatment step. After the alkali treatment step, before the defibration treatment step, from the viewpoint of improving handleability, it is desirable that the ionic group-introduced fibers which have been subjected to the alkali treatment are washed with water or an organic solvent.

(Acid Treatment Step)

When the modified CNF is produced, an acid treatment may be performed on the ionic group-introduced fibers between the step of introducing the ionic group, and the defibration treatment step to be described below. For example, the ionic group introducing step, the acid treatment, the alkali treatment and the defibration treatment may be performed in this order.

The method for the acid treatment is not particularly limited, but examples thereof include a method of immersing the ionic group-introduced fibers in an acid-containing acidic liquid. The concentration of the acidic liquid to be used is not particularly limited, but is preferably, for example, 10% by mass or less, more preferably 5% by mass or less. In addition, pH of the acidic liquid to be used is not particularly limited, but is preferably, for example, 0 or more and 4 or less, more preferably 1 or more and 3 or less. Examples of the acid contained in the acidic liquid include inorganic acid, sulfonic acid, and carboxylic acid. Examples of the inorganic acid include sulfuric acid, nitric acid, hydrochloric acid, hydrobromic acid, hydroiodic acid, hypochlorous acid, chlorous acid, chloric acid, perchloric acid, phosphoric acid, and boric acid. Examples of the sulfonic acid include methanesulfonic acid, ethanesulfonic acid, benzenesulfonic acid, p-toluenesulfonic acid, and trifluoromethanesulfonic acid. Examples of the carboxylic acid include formic acid, acetic acid, citric acid, gluconic acid, lactic acid, oxalic acid, and tartaric acid. Among them, it is particularly preferable to use hydrochloric acid or sulfuric acid.

The temperature of the acid solution in the acid treatment is not particularly limited, but is preferably, for example, 5°C or more and 100°C or less, more preferably 20°C or more and 90°C or less. The time of immersion in the acid solution in the acid treatment is not particularly limited, but is preferably, for example, 5 min or more and 120 min or less, more preferably 10 min or more and 60 min or less. The use amount of the acid solution in the acid treatment is not particularly limited, but is preferably, for example, 100% by mass or more and 100,000% by mass or less, more preferably 1,000% by mass or more and 10,000% by mass or less with respect to the absolute dry mass of the ionic group-introduced fibers.

(Defibration treatment step)

The modified CNF is obtained by defibering the ionic group-introduced fibers in the defibration treatment step. In addition, the unmodified CNF is obtained by defibering fibers into which ionic groups are not introduced.

In the defibration treatment step, for example, a defibering device may be used. The defibering device is not particularly limited, but, examples thereof include a high-speed defibrator, a grinder (a millstone-type crusher), a high-pressure homogenizer or an ultra-high-pressure homogenizer, a high-pressure collision-type crusher, a ball mill, a bead mill, a disc-type refiner, a conical refiner, a twin-screw kneader, a vibration mill, a homomixer under high-speed rotation, an ultrasonic disperser, and a beater. Among the defibering devices, it is more preferable to use a high-speed defibrator, a high-pressure homogenizer, or an ultra-high-pressure homogenizer which is less affected by a crushing medium and has a low risk of contamination.

In the defibration treatment step, for example, it is preferable that the ionic group-introduced fibers or ionic group-free fibers are diluted with a dispersion medium and then take a slurry form. As for the dispersion medium, one type or two or more types selected from water, and organic solvents such as a polar organic solvent may be used. The polar organic solvent is not particularly limited, but, for example, alcohols, polyhydric alcohols, ketones, ethers, esters, an aprotic polar solvent and the like are preferable. Examples of the alcohols include methanol, ethanol, isopropanol, n-butanol, and isobutylalcohol. Examples of the polyhydric alcohols include ethyleneglycol, propyleneglycol, and glycerin. Examples of the ketones include acetone and methylethylketone (MEK). Examples of the ethers include diethylether, tetrahydrofuran, ethyleneglycol monomethylether, ethyleneglycol monoethylether, ethyleneglycol mono-n-butylether,

and propyleneglycol monomethylether. Examples of the esters include ethyl acetate, and butyl acetate. Examples of the aprotic polar solvent include dimethylsulfoxide (DMSO), dimethylformamide (DMF), dimethylacetamide (DMAc), and N-methyl-2-pyrrolidinone (NMP).

The solid content concentration of the ultrafine fibrous cellulose at the time of the defibration treatment may be properly set. In addition, the slurry obtained by dispersing the ionic group-introduced fibers or the fibers into which ionic groups are not introduced, in the dispersion medium, may contain, for example, any solid content other than the ionic group-introduced fibers or the fibers into which ionic groups are not introduced, such as urea having a hydrogen bondability.

In the present invention, as for the modified CNF and the unmodified CNF, commercially available products may be used. Examples of commercially available products of the modified CNF include AUROVISCO (manufactured by Oji Holdings Corporation, phosphoric acid group-introduced modified CNF), RHEOCRYSTA (manufactured by DKS Co., Ltd, carboxy group-introduced modified CNF), and Cellenpia (manufactured by NIPPON PAPER INDUSTRIES Co., Ltd., carboxymethyl group-introduced modified CNF, or carboxy group-introduced modified CNF), and examples of commercially available products of the unmodified CNF include BiNFi-s (manufactured by Sugino Machine limited).

<Pulp Fibers>

The fibrous cellulose of the present invention may contain pulp fibers having a fiber width of 10 μm or more, as the fibrous cellulose.

The fiber width of the pulp fibers is 10 μm or more, preferably 15 μm or more, more preferably 20 μm or more, and is preferably 100 μm or less, more preferably 80 μm or less, further preferably 50 μm or less.

When the fiber width of the pulp fibers is within the range, it is possible to reduce the viscosity of a dispersion liquid of the fibrous cellulose without impairing the dispersion stability of calcium carbonate powder.

The pulp fibers include those having branch-like portions with widths of 1,000 nm or less on their surfaces.

The pulp fibers may have ionic groups or may not have ionic groups.

As for the pulp fibers, the above-described cellulose-containing fiber raw material may be used through a beating process.

The fiber width of the pulp fibers may be measured by using a Kajaani fiber length analyzer (Kajaani Automation Inc, FS-200 type).

The pulp fiber preferably has an ionic group. As the ionic group, the ionic groups exemplified for the modified CNF are similarly exemplified, and the preferable range is also similarly applied. The pulp fibers having the ionic groups may be produced by the same method as that for the modified CNF except that a defibration treatment step is not included.

<Physical Properties of Fibrous Cellulose>

(Content Ratios of Modified CNF, Unmodified CNF, and Pulp Fibers)

It is desirable that the fibrous cellulose of the present invention contains modified CNF, and further contains at least one selected from the group consisting of pulp fibers and unmodified CNF.

The fibrous cellulose of the present invention may contain only the modified CNF, may contain the modified CNF and the unmodified CNF, may contain the modified CNF and the pulp fibers, or may contain the modified CNF, the unmodified CNF, and the pulp fibers.

Among these, it is preferable to contain only the modified CNF, to contain the modified CNF and the pulp fibers, or to contain the modified CNF and the unmodified CNF, it is more preferable to contain only the modified CNF, or to contain the modified CNF and the pulp fibers, and from the viewpoint of obtaining a dispersion liquid having a lower viscosity, it is further preferable to contain the modified CNF and the pulp fibers.

When the modified CNF and the pulp fibers are contained in the fibrous cellulose of the present invention, that is, when the unmodified CNF is not contained, and the modified CNF and the pulp fibers are contained, the mass ratio of the pulp fibers to the modified CNF (pulp fibers/modified CNF) is preferably 30/70 or more, more preferably 40/60 or more, further preferably 50/50 or more, and is preferably 90/10 or less, more preferably 80/20 or less, further preferably 70/30 or less from the viewpoint of the dispersion stability of the calcium carbonate powder, the pressure-feeding property, and the viscosity reduction of the dispersion liquid of the fibrous cellulose. In the case, containing a small amount of unmodified CNF (e.g., 1% by mass or less in the solid content of the fibrous cellulose) is not excluded.

In addition, when the modified CNF and the unmodified CNF are contained in the fibrous cellulose of the present invention, that is, when the pulp fibers are not contained, and the modified CNF and the unmodified CNF are contained, the mass ratio of the unmodified CNF to the modified CNF in the fibrous cellulose (unmodified CNF/modified CNF) is preferably 30/70 or more, more preferably 40/60 or more, further preferably 50/50 or more, and is preferably 90/10 or less, more preferably 80/20 or less, further preferably 70/30 or less from the viewpoint of the dispersion stability of the

calcium carbonate powder, the pressure-feeding property, and the viscosity reduction of the dispersion liquid of the fibrous cellulose. In the case, containing a small amount of pulp fibers (e.g., 1% by mass or less in the solid content of the fibrous cellulose) is not excluded.

When the fibrous cellulose of the present invention contains the modified CNF, the pulp fibers, and the unmodified CNF, the total mass ratio of the pulp fibers and the unmodified CNF to the modified CNF in the fibrous cellulose ((pulp fibers + unmodified CNF)/modified CNF) is preferably 30/70 or more, more preferably 40/60 or more, further preferably 50/50 or more, and is preferably 90/10 or less, more preferably 80/20 or less, further preferably 70/30 or less from the viewpoint of the dispersion stability of the calcium carbonate, the pressure-feeding property, and the viscosity reduction of the dispersion liquid of the fibrous cellulose.

(Viscosity)

In the present invention, when the fibrous cellulose contains only the modified CNF, for the dispersion liquid (slurry) in which the solid content concentration of the fibrous cellulose is adjusted to 0.4% (0.4% by mass), the viscosity at 23°C is preferably 500 mPa·s or more, more preferably $1.0\times10^3$mPa·s or more, further preferably $3\times10^3$ mPa·s or more, still more preferably $5.0\times10^3$ mPa·s or more from the viewpoint of further improving the dispersion stability of the calcium carbonate powder, and is preferably $1\times10^5$ mPa·s or less, more preferably $7\times10^4$ mPa·s or less, further preferably $5\times10^4$ mPa·s or less, further more preferably $3.5\times10^4$mPa·s or less, further more preferably $2.5\times10^4$mPa·s or less, even still more preferably $1.5\times10^4$mPa·s or less from the similar viewpoint.

The viscosity is measured by using a B-type viscometer under conditions of 23°C and a rotation speed of 3 rpm after the slurry in which the solid content concentration of the fibrous cellulose is adjusted to 0.4% is stirred by a disperser at 1500 rpm for 5 min, and then is allowed to stand still for 24 h under an environment of 23°C and a relative humidity of 50% before the measurement. More specifically, for example, an analog viscometer T-LVT manufactured by BLOOKFIELD, as the B-type viscometer, may be used. When the measurement is performed under the measurement conditions including, for example, a liquid temperature of 23°C and a viscometer rotation speed of 3 rpm, 3 min after the start of the measurement, the viscosity value is set as the viscosity of the corresponding dispersion liquid. In the dispersion liquid, the fibrous cellulose may be completely dissolved or may be in a dispersed state.

In addition, in the present invention, when the fibrous cellulose contains at least one selected from the group consisting of the unmodified CNF and the pulp fibers in addition to the modified CNF, for the dispersion liquid (slurry) in which the solid content concentration of the fibrous cellulose is adjusted to 0.4% (0.4% by mass), the viscosity at 23°C is preferably 100 mPa·s or more, more preferably 125 mPa·s or more, further preferably 150 mPa·s or more from the viewpoint of improving the handleability in actual use, and the viewpoint of further improving the dispersion stability of the calcium carbonate powder, and is preferably 3,000 mPa·s or less, more preferably 2,000 mPa·s or less, further preferably 1,500 mPa·s or less, still more preferably 1,000 mPa·s or less, even still more preferably 500 mPa·s or less from the similar viewpoint.

The viscosity is measured by using a B-type viscometer under conditions of 23°C and a rotation speed of 3 rpm after the slurry in which the solid content concentration of the fibrous cellulose is adjusted to 0.4% is stirred by a disperser at 1500 rpm for 5 min, and then is allowed to stand still for 24 h under an environment of 23°C and a relative humidity of 50% before the measurement. More specifically, for example, an analog viscometer T-LVT manufactured by BLOOKFIELD, as the B-type viscometer, may be used. When the measurement is performed under the measurement conditions including, for example, a liquid temperature of 23°C and a viscometer rotation speed of 3 rpm, 3 min after the start of the measurement, the viscosity value is set as the viscosity of the corresponding dispersion liquid. In the dispersion liquid, the fibrous cellulose may be completely dissolved or may be in a dispersed state.

The solvent for the dispersion liquid is preferably an aqueous medium, and the content of water is preferably 50% by mass or more, more preferably 70% by mass or more, further preferably 90% by mass or more.

When the fibrous cellulose of the present invention contains components, for example, a pigment, an antioxidant, and a pH adjuster to be described below other than the modified CNF, the pulp fibers, and the unmodified CNF, it is desirable that the viscosity in a state where only the modified CNF, the pulp fibers and the unmodified CNF are contained falls within the range. Otherwise, when components other than the modified CNF, the pulp fibers, and the unmodified CNF are contained, but it is difficult to remove the other components, it is desirable that the viscosity of the dispersion liquid in which the total solid content of the modified CNF, the pulp fibers, and the unmodified CNF is adjusted to 0.4% falls within the range.

(TI value)

In the present invention, the thixotropic index (TI value) of the fibrous cellulose, which is represented by the following formula (1), is preferably 30 or more, more preferably 50 or more, further preferably 60 or more, still more preferably 75 or more, even still more preferably 90 or more from the viewpoint of obtaining a primer having a more

excellent pressure-feeding property.

Then, the upper limit is preferably 600 or less, more preferably 500 or less, further preferably 400 or less, still more preferably 350 or less from the viewpoint of the availability of the fibrous cellulose and the dispersion stability of the primer but there is no particular limitation.

$$\text{TI value} = (\text{viscosity at a shear rate of } 1/\text{s})/(\text{viscosity at a shear rate of } 1{,}000/\text{s}) \qquad (1)$$

The viscosity is a viscosity of a dispersion liquid with a solid content concentration of 0.4%, at 23°C.

The TI value is measured by a method described in Examples.

When the fibrous cellulose contains only the modified CNF, it is particularly preferable that the TI value falls within the range.

[Concrete-Pump Pressure-Feeding Primer]

The fibrous cellulose of the present invention is used for producing a concrete-pump pressure-feeding primer through mixing with calcium carbonate powder.

In the present invention, the concrete-pump pressure-feeding primer generally has a powder form or a paste form, and is dispersed with addition of water before its use. A dispersion liquid obtained in this manner is put into a hopper of a concrete pump. The "concrete-pump pressure-feeding primer" does not mean only the state of the powder form, but also means the dispersion liquid obtained through dispersion in water.

Therefore, in the present invention, the fibrous cellulose in a powder form such as a wet powder form may exist as a powdery pressure-feeding primer as a whole through mixing with calcium carbonate. When the fibrous cellulose is in the state of a dispersion liquid (slurry form), and calcium carbonate powder-containing powder is used for an aqueous dispersion liquid, the dispersion liquid (slurry) containing the fibrous cellulose may be added, and then may be mixed with the calcium carbonate so as to obtain a primer (dispersion liquid).

In the present invention, the amount of the fibrous cellulose to be mixed with 100 parts by mass of the calcium carbonate powder is preferably 0.0001 parts by mass or more, more preferably 0.001 parts by mass or more, further preferably 0.01 parts by mass or more from the viewpoint of obtaining a primer excellent in the dispersion stability and the pressure-feeding property, and is preferably 100 parts by mass or less, more preferably 10 parts by mass or less, further preferably 1 part by mass or less, further more preferably 0.1 parts by mass or less, further more preferably 0.05 parts by mass or less, further more preferably 0.03 parts by mass or less, even still more preferably 0.02 parts by mass or less from the similar viewpoint.

The amount of the fibrous cellulose to be mixed means a mixing amount of dried fibrous cellulose.

In the present invention, the primer contains at least the calcium carbonate powder.

The content of the calcium carbonate powder in the solid content of the primer is preferably 50% by mass, more preferably 60% by mass or more, further preferably 70% by mass or more, still more preferably 80% by mass or more, and is preferably 99.9% by mass or less from the viewpoint of excellence in the dispersibility and the pressure-feeding property, and from the viewpoint of suppressing blockage of a concrete pipe.

The calcium carbonate powder may be light calcium carbonate powder such as precipitated calcium carbonate, or may be heavy calcium carbonate powder obtained by crushing limestone. Although there is no particular limitation, calcium carbonate powder having a small particle size is preferred from the viewpoint of obtaining an excellent performance as a primer. In addition, calcium carbonate powder for which particle size adjustment or component adjustment has been performed may be used.

Among them, from the viewpoint of exhibiting an excellent performance as a primer, it is preferable to contain porous calcium carbonate powder. Examples of the porous calcium carbonate include porous calcium carbonate obtained by adjusting the particle size or adjusting the components in the ready-mixed concrete sludge.

In addition, examples of the calcium carbonate powder include ultrafine powder calcium carbonate having a uniform particle shape, such as precipitated calcium carbonate.

In the present invention, the primer may contain other components besides the calcium carbonate powder and the fibrous cellulose.

Examples of other components include inorganic powder other than the calcium carbonate powder, a water-absorbent resin, a water-soluble resin, a pigment, an antioxidant, and a pH adjuster. In the present invention, it is more preferable that the fibrous cellulose is mixed with at least one selected from the group consisting of a pigment, an antioxidant, and a pH adjuster.

Examples of the inorganic powder other than the calcium carbonate powder include calcium hydroxide, hydrotalcite, and calcium oxide. In addition, the pigment may be either of an inorganic pigment or an organic pigment. When the pigment is contained, the visibility of a discharged primer is improved, and thus it becomes easy to monitor the end of discharging of the primer. As for the organic pigment, an organic-based fluorescent pigment is particularly preferred from the viewpoint of visibility.

In addition, an antioxidant such as erythorbic acid or a pH adjuster may be added for the purpose of oxidation prevention or pH adjustment. When the antioxidant, the pH adjuster, and the like are added, the dispersibility of the primer is further improved, and the corrosion in a pipe or the influence caused by mixing with concrete is reduced.

[Examples]

Hereinafter, the features of the present invention will be more specifically described with reference to Examples and Comparative Examples. Materials, use amounts, ratios, processing contents, processing procedures and the like described in Examples below may be properly changed as long as they do not deviate from the gist of the present invention. Therefore, the scope of the present invention should not be construed as limited by specific examples described below.

As for fibrous cellulose used in each of Examples and Comparative Examples, those produced by the following Production Examples were used.

(Production Example 1-1)

(Production of Phosphoric Acid Group-Introduced Pulp)

As raw material pulp, needle leaved tree kraft pulp manufactured by Oji Paper (solid content 93% by mass, basis weight 208 g/m$^2$, sheet form, Canada standard freeness (CSF) measured in accordance with JIS P 8121 after disaggregation is 700 mL) was used. On the raw material pulp, a phosphorylation treatment was performed as follows. First, a mixed aqueous solution of ammonium dihydrogen phosphate and urea was added to 100 parts by mass (absolute dry mass) of the raw material pulp, and adjustment was performed for 45 parts by mass of ammonium dihydrogen phosphate, 120 parts by mass of urea, and 150 parts by mass of water. Then, chemical-impregnated pulp was obtained. Next, the obtained chemical-impregnated pulp was heated by a hot air dryer of 165°C for 200 sec, and a phosphoric acid group was introduced into cellulose in the pulp to obtain phosphoric acid group-introduced pulp (hereinafter, also referred to as "phosphorylated pulp"). Next, a washing treatment was performed on the obtained phosphorylated pulp. The washing treatment was performed by repeating an operation in which a pulp dispersion liquid that was obtained by pouring 10 L of ion-exchange water into 100 g (absolute dry mass) of the phosphorylated pulp was stirred such that the pulp was uniformly dispersed, and then, filtering and dehydration were performed. The point in time when the electrical conductivity of the filtrate became 100 $\mu$S/cm or less was set as the end point of washing.

Next, a neutralization treatment was performed on the washed phosphorylated pulp in the following manner. First, the washed phosphorylated pulp was diluted with 10 L of ion-exchange water, and then was stirred while a 1 N sodium hydroxide aqueous solution was added thereto little by little so as to obtain a phosphorylated pulp slurry with pH of 12 or more and 13 or less. Next, the corresponding phosphorylated pulp slurry was dehydrated to obtain neutralized phosphorylated pulp. Then, the washing treatment was performed on the neutralized phosphorylated pulp.

On the phosphorylated pulp obtained in this manner, an infrared absorption spectrum was measured by using FT-IR. As a result, absorption based on a phosphoric acid group was observed around 1230 cm$^{-1}$, and then it was confirmed that the phosphoric acid group was added to the pulp. In addition, the amount of the phosphoric acid groups (the amount of strong acid groups), which was measured by a measurement method to be described below, was 1.45 mmol/g. In addition, the obtained phosphorylated pulp was provided, and analyzed by an X-ray diffraction device, and as a result, typical peaks were confirmed at two positions around $2\theta$=14° or more and 17° or less and around $2\theta$=22° or more and 23° or less, and it was confirmed that cellulose I-type crystals were contained.

(Production of Fibrous Cellulose Dispersion Liquid)

Ion-exchange water was added to the obtained phosphorylated pulp to prepare a slurry with a solid content concentration of 2% by mass. This slurry was treated with a wet pulverizing device (manufactured by Sugino Machine limited, STAR BURST) at a pressure of 200 MPa once, to obtain fibrous cellulose dispersion liquid 1-1 containing ultrafine fibrous modified cellulose. Through X-ray diffraction, it was confirmed that the ultrafine fibrous modified cellulose maintained the cellulose I-type crystals. In addition, when the fiber width of the ultrafine fibrous modified cellulose was measured by using a transmission type electron microscope, the result was 3 to 5 nm.

The amount of the phosphoric acid groups (the amount of strong acid groups) in the fibrous cellulose, which was measured by the measurement method to be described below, was 1.45 mmol/g, and the degree of polymerization

was 680.

(Production Example 1-2)

Fibrous cellulose dispersion liquid 1-2 was obtained in the same manner as in Production Example 1-1 except that a treatment with a wet pulverizing device was performed at a pressure of 200 MPa twice so that the degree of polymerization of the fibrous cellulose became 590 in Production Example 1-1.

(Production Example 1-3)

Fibrous cellulose dispersion liquid 1-3 was obtained in the same manner as in Production Example 1-1 except that a treatment with a wet pulverizing device was performed four times at a pressure of 200 MPa so that the degree of polymerization of the fibrous cellulose became 499 in Production Example 1-1.

(Production Example 1-4)

Fibrous cellulose dispersion liquid 1-4 was obtained in the same manner as in Production Example 1-1 except that a treatment with a wet pulverizing device was performed six times at a pressure of 200 MPa so that the degree of polymerization of the fibrous cellulose became 459 in Production Example 1-1.

(Production Example 1-5)

(Production of Phosphoric Acid Group-Introduced Pulp)

As raw material pulp, needle leaved tree kraft pulp manufactured by Oji Paper (solid content 93% by mass, basis weight 208g/$m^2$, sheet form, Canada standard freeness (CSF) measured in accordance with JIS P 8121 after disaggregation is 700 mL) was used. On the raw material pulp, a phosphorylation treatment was performed as follows. First, a mixed aqueous solution of ammonium dihydrogen phosphate and urea was added to 100 parts by mass (absolute dry mass) of the raw material pulp, and adjustment was performed for 45 parts by mass of ammonium dihydrogen phosphate, 120 parts by mass of urea, and 150 parts by mass of water. Then, chemical-impregnated pulp was obtained. Next, the obtained chemical-impregnated pulp was heated by a hot air dryer of 165°C for 200 sec, and a phosphoric acid group was introduced into cellulose in the pulp to obtain phosphoric acid group-introduced pulp (phosphorylated pulp). Next, a washing treatment was performed on the obtained phosphorylated pulp. The washing treatment was performed by repeating an operation in which a pulp dispersion liquid that was obtained by pouring 10 L of ion-exchange water into 100 g (absolute dry mass) of the phosphorylated pulp was stirred such that the pulp was uniformly dispersed, and then, filtering and dehydration were performed. The point in time when the electrical conductivity of the filtrate became 100 $\mu$S/cm or less was set as the end point of washing. The washed phosphorylated pulp was further subjected to the phosphorylation treatment, and the washing treatment in this order once.

Next, a neutralization treatment was performed on the washed phosphorylated pulp in the following manner. First, the washed phosphorylated pulp was diluted with 10 L of ion-exchange water, and then was stirred while a 1 N sodium hydroxide aqueous solution was added thereto little by little so as to obtain a phosphorylated pulp slurry with pH of 12 or more and 13 or less. Next, the corresponding phosphorylated pulp slurry was dehydrated to obtain neutralized phosphorylated pulp. Next, the above-mentioned washing treatment was performed on the neutralized phosphorylated pulp.

On the phosphorylated pulp obtained in this manner, an infrared absorption spectrum was measured by using FT-IR. As a result, absorption based on a phosphoric acid group was observed around 1230 $cm^{-1}$, and then it was confirmed that the phosphoric acid group was added to the pulp. In addition, the amount of the phosphoric acid groups (the amount of strong acid groups), which was measured by the measurement method to be described below, was 2.00 mmol/g. In addition, the obtained phosphorylated pulp was provided, and analyzed by an X-ray diffraction device, and as a result, typical peaks were confirmed at two positions around $2\theta$=14° or more and 17° or less and around $2\theta$=22° or more and 23° or less, and it was confirmed that cellulose I-type crystals were included.

(Production of Fibrous Cellulose Dispersion Liquid)

Ion-exchange water was added to the obtained phosphorylated pulp to prepare a slurry with a solid content concentration of 2% by mass. This slurry was treated with a wet pulverizing device (manufactured by Sugino Machine limited, STAR BURST) at a pressure of 200 MPa once, to obtain fibrous cellulose dispersion liquid 1-5 containing ultrafine fibrous modified cellulose. Through X-ray diffraction, it was confirmed that the ultrafine fibrous modified cellulose maintained the cellulose I-type crystals. In addition, when the fiber width of the ultrafine fibrous modified cellulose was measured by using a transmission type electron microscope, the result was 3 to 5 nm.

The amount of the phosphoric acid groups (the amount of strong acid groups) in the fibrous cellulose, which was measured by the measurement method to be described below, was 2.00 mmol/g, and the degree of polymerization was 625.

(Production Example 1-6)

Fibrous cellulose dispersion liquid 1-6 was obtained in the same manner as in Production Example 1-1 except that a treatment with a wet pulverizing device was performed twice at a pressure of 200 MPa so that the amount of the phosphoric acid groups in the fibrous cellulose became 2.00 mmol/g, and the degree of polymerization became 536 in Production Example 1-5.

(Production Example 1-7)

Fibrous cellulose dispersion liquid 1-7 was obtained in the same manner as in Production Example 1-5 except that a treatment with a wet pulverizing device was performed 4 times at a pressure of 200 MPa so that the amount of the phosphoric acid groups in the fibrous cellulose became 2.00 mmol/g, and the degree of polymerization became 482 in Production Example 1-5.

(Production Example 1-8)

Fibrous cellulose dispersion liquid 1-8 was obtained in the same manner as in Production Example 1-5 except that a treatment with a wet pulverizing device was performed six times at a pressure of 200 MPa so that the amount of the phosphoric acid groups in the fibrous cellulose became 2.00 mmol/g, and the degree of polymerization became 444 in Production Example 1-5.

(Production Example 1-9)

(Production of Phosphorous Acid Group-Introduced Pulp)

Phosphorous acid group-introduced pulp (hereinafter, also referred to as " phosphited (sub-phosphorylated) pulp") was obtained by performing an operation in the same manner as in Production Example 1-1 except that 33 parts by mass of phosphorous acid (phosphonic acid) was used instead of ammonium dihydrogen phosphate.

Next, a washing treatment was performed on the obtained phosphited pulp. The washing treatment was performed by repeating an operation in which a pulp dispersion liquid that was obtained by pouring 10 L of ion-exchange water into 100 g (absolute dry mass) of the phosphited pulp was stirred such that the pulp was uniformly dispersed, and then, filtering and dehydration were performed. The point in time when the electrical conductivity of the filtrate became 100 $\mu$S/cm or less was set as the end point of washing.

Next, a neutralization treatment was performed on the washed phosphited pulp in the following manner. First, the washed phosphited pulp was diluted with 10 L of ion-exchange water, and then was stirred while a 1 N sodium hydroxide aqueous solution was added thereto little by little so as to obtain a phosphited pulp slurry with pH of 12 or more and 13 or less. Next, the corresponding phosphited pulp slurry was dehydrated to obtain neutralized phosphited pulp. Then, the washing treatment was performed on the neutralized phosphited pulp.

On the phosphited pulp obtained in this manner, an infrared absorption spectrum was measured by using FT-IR. As a result, absorption based on P=O of a phosphonate group as a tautomer of the phosphorous acid group was observed around 1210 $cm^{-1}$, and then it was confirmed that the phosphorous acid group (phosphonate group) was added to the pulp.

In addition, the obtained phosphited pulp was provided, and analyzed by an X-ray diffraction device, and as a result, typical peaks were confirmed at two positions around $2\theta$=14° or more and 17° or less and around $2\theta$=22° or more and 23° or less, and it was confirmed that cellulose I-type crystals were included.

(Production of Fibrous Cellulose Dispersion Liquid)

Ion-exchange water was added to the obtained phosphited pulp to prepare a slurry with a solid content concentration of 2% by mass. This slurry was treated with a wet pulverizing device (manufactured by Sugino Machine limited, STAR BURST) at a pressure of 200 MPa six times, to obtain fibrous cellulose dispersion liquid 1-9 containing ultrafine fibrous modified cellulose. Through X-ray diffraction, it was confirmed that the ultrafine fibrous modified cellulose maintained the cellulose I-type crystals. In addition, when the fiber width of the ultrafine fibrous modified cellulose was measured by using a transmission type electron microscope, the result was 3 to 5 nm.

The amount of the phosphorous acid groups (the amount of strong acid groups) in the fibrous cellulose, which was measured by the measurement method to be described below, was 1.80 mmol/g, and the degree of polymerization was 430.

(Production Example 1-10)

(Production of Carboxy Group-Introduced Pulp)

As raw material pulp, needle leaved tree kraft pulp manufactured by Oji Paper (solid content 93% by mass, basis weight 208 g/m$^2$, sheet form, Canada standard freeness (CSF) measured in accordance with JIS P 8121 after disaggregation is 700 mL) was used. On the raw material pulp, a TEMPO oxidation treatment was performed as follows.

First, the raw material pulp equivalent to 100 parts by mass (dry mass), 1.6 parts by mass of TEMPO (2,2,6,6-tetramethylpiperidine-1-oxyl), and 10 parts by mass of sodium bromide were dispersed in 10,000 parts by mass of water. Then, a sodium hypochlorite aqueous solution of 13% by mass was added to 1.0 g of the pulp up to 10 mmol and the reaction was started. During the reaction, a 0.5 M sodium hydroxide aqueous solution was added dropwise so that pH was maintained at 10 or more and 10.5 or less, and then the point in time when no change occurred in pH was considered as the end of the reaction.

Next, a washing treatment was performed on the obtained carboxy group-introduced pulp (hereinafter, also referred to as the "TEMPO oxidized pulp"). The washing treatment was performed by repeating an operation in which a dehydrated sheet was obtained by dehydrating the TEMPO oxidized pulp slurry, and was uniformly dispersed through stirring after 5,000 parts by mass of ion-exchange water was poured, and then filtration and dehydration were performed. The point in time when the electrical conductivity of the filtrate became 100 $\mu$S/cm or less was set as the end point of washing.

In addition, the obtained TEMPO oxidized pulp was provided, and analyzed by an X-ray diffraction device, and as a result, typical peaks were confirmed at two positions around $2\theta$=14° or more and 17° or less and around $2\theta$=22° or more and 23° or less, and it was confirmed that cellulose I-type crystals were included.

(Production of Fibrous Cellulose Dispersion Liquid)

Ion-exchange water was added to the obtained TEMPO oxidized pulp to prepare a slurry with a solid content concentration of 2% by mass. This slurry was treated with a wet pulverizing device (manufactured by Sugino Machine limited, STAR BURST) at a pressure of 200 MPa six times, to obtain fibrous cellulose dispersion liquid 1-10 containing ultrafine fibrous modified cellulose.

The amount of the carboxy groups in the fibrous cellulose, which was measured by the measurement method to be described below, was 1.80 mmol/g, and the degree of polymerization was 336.

<Measurement Method>

(Measurement on Amount of Ionic Groups in Fibrous Cellulose Dispersion Liquid)

The amount of ionic groups in fibrous cellulose was measured by performing a treatment with an ion-exchange resin on a fibrous cellulose-containing slurry that was produced by diluting fibrous cellulose dispersion liquid containing target ultrafine fibrous modified cellulose with ion-exchange water (a content of 0.2% by mass), and then, performing titration using alkali.

The treatment with the ion-exchange resin was performed by adding a strong acid ion-exchange resin (Amberjet 1024; manufactured by ORGANO CORPORATION, conditioned) with a volume of 1/10 to the ultrafine fibrous modified cellulose-containing slurry, performing shaking, and separating the resin from the slurry through pouring on a mesh with a mesh size of 90 $\mu$m.

In addition, the titration using alkali was performed by measuring the change in the value of the electrical conductivity indicated by the slurry while adding 50 $\mu$L of a 0.1 N sodium hydroxide aqueous solution every 30 seconds to the ultrafine fibrous cellulose-containing slurry that had been subjected to the treatment with the ion-exchange resin. The amount of the ionic groups (mmol/g) was calculated by dividing the amount of required alkali (mmol) in a region in the measurement result corresponding to the first region illustrated in Fig. 1 or 3, by the solid content (g) in the slurry as a titration target.

(Measurement on Degree of Polymerization of Fibrous Cellulose)

The degree of polymerization of fibrous cellulose was measured according to Tappi T230. That is, after measurement was performed on a viscosity (referred to as $\eta_1$) measured when fibrous cellulose as a measurement target was dispersed in a dispersion medium, and a blank viscosity (referred to as $\eta_0$) measured by only a dispersion medium, a specific viscosity ($\eta_{sp}$), and an intrinsic viscosity ([η]) were measured according to the following formulas.

$$\eta_{sp}=(\eta_1/\eta_0)-1$$

$$[\eta]=\eta_{sp}/(c(1+0.28\times\eta_{sp}))$$

Here, "c" in the formula indicates a concentration of the fibrous cellulose at the time of the viscosity measurement.
In addition, the degree of polymerization (DP) of the fibrous cellulose was calculated from the following formula.

$$DP=1.75\times[\eta]$$

This degree of polymerization is an average degree of polymerization measured according to a viscosity method, and thus may be referred to as a "viscosity-average polymerization degree."

(Measurement on Viscosity of Fibrous Cellulose Dispersion Liquid)

The viscosity of the fibrous cellulose dispersion liquid was measured as follows. First, the fibrous cellulose dispersion liquid was diluted with ion-exchange water such that the solid content concentration became 0.4%, and then was stirred by a disperser at 1,500 rpm for 5 min. Then, the viscosity of the dispersion liquid obtained in this manner was measured by using a B-type viscometer (manufactured by BLOOKFIELD, an analog viscometer T-LVT). Under the measurement condition of a rotation speed of 3 rpm, 3 min after the start of the measurement, the viscosity value was set as the viscosity of the corresponding dispersion liquid. In addition, the dispersion liquid as a measurement target was allowed to stand still for 24 h under an environment of 23°C and a relative humidity of 50% before the measurement. The liquid temperature of the dispersion liquid at the time of measurement was 23°C.

(Measurement on Viscosity of Fibrous Cellulose Dispersion Liquid by Rheometer)

The fibrous cellulose dispersion liquid was diluted with ion-exchange water to have a solid content concentration of 0.4%, and then, the viscosity was measured by using a rheometer (manufactured by HAAKE, RheoStress6000). The shear rate was changed under the following conditions.

Measurement temperature: 23°C
Measuring jig: cone plate (diameter 40 mm, angle 1°)
Shear rate: 0.001 to 1,000 $sec^{-1}$
Data score: 100
Data distribution: Log interval
Measurement time: 5 min

(Calculation of TI Value)

When the viscosity was measured by the rheometer, a value obtained by dividing a viscosity value ($\eta_1$) measured under a condition of a shear rate of 1 $sec^{-1}$, by a viscosity value ($\eta_2$) measured under a condition of a shear rate of 1,000 $sec^{-1}$was set as a thixotropic index value (TI value).
That is, a TI value was defined by the following formula.

$$\text{TI value}=\eta_1/\eta_2$$

$\eta_1$: a viscosity measured under a condition of a shear rate of 1 $sec^{-1}$
$\eta_2$: a viscosity measured under a condition of a shear rate of 1,000 $sec^{-1}$

(Production of Model Pressure-Feeding Primer)

(Example 1-1)

100 parts by mass of porous calcium carbonate, and 200 parts by mass of water were mixed, and 0.015 parts by mass of the fibrous cellulose dispersion liquid 1-1 was added thereto, as a solid content. Through sufficient mixing, a model pressure-feeding primer was produced.

(Examples 1-2 to 1-10)

Model pressure-feeding primers were produced in the same manner as in Example 1-1 except that the fibrous cellulose dispersion liquids 1-2 to 1-10 obtained by Production Examples 1-2 to 1-10, respectively, were used instead of the fibrous cellulose dispersion liquid 1-1.

(Comparative Example 1-1)

A model pressure-feeding primer was produced in the same manner as in Example 1-1 except that fibrous cellulose dispersion liquid 1-11 (manufactured by Sugino Machine limited, IMa-10002) was used instead of the fibrous cellulose dispersion liquid 1-1.

(Comparative Example 1-2)

A model pressure-feeding primer was produced in the same manner as in Example 1-1 except that guar gum (manufactured by Tokyo Chemical Industry Co., Ltd.) was used.

(Reference Example 1-1)

A model pressure-feeding primer was produced in the same manner as in Example 1-1 except that water was used instead of the fibrous cellulose dispersion liquid 1-1.

<Evaluation Method>

(Dispersion Stability Evaluation)

The model pressure-feeding primer of Examples 1-1 to 1-10, Comparative Examples 1-1 and 1-2, and Reference Example 1-1 was diluted with ion-exchange water to have a solid content concentration of 1%, and was separately collected by a 10-mL screw vial bottle (manufactured by AS ONE Corporation), and then was allowed to stand still for 5 min. The distance from the bottom of the vial bottle to the liquid surface was set as 3 cm. The dispersion stability was evaluated according to the following evaluation criteria. The results are noted in Table 1.

A: a good dispersion stability is shown without separation
B: a dispersion stability not causing any problem in use is shown although there is slight separation
C: significant separation occurs, making it unavailable

In addition, on Example 1-1 and Comparative Example 1-1, a distance between the liquid surface within the screw bottle and the interface of water generated by separation was measured. The results are noted in Table 2.

Table 1

| | | Fibrous Cellulose | | | | | Example | | | | | | | | | | Comparative Example | | Reference Example 1-1 |
|---|---|---|---|---|---|---|---|---|---|---|---|---|---|---|---|---|---|---|---|
| | | Ionic group | Introduction amount (mmol/g) | Degree of Polymerization (-) | Viscosity (mPa·s) | TI value (-) | 1-1 | 1-2 | 1-3 | 1-4 | 1-5 | 1-6 | 1-7 | 1-8 | 1-9 | 1-10 | 1-1 | 1-2 | |
| Fibrous Cellulose (parts by mass) | 1-1 | Phosphoric acid | 1.45 | 680 | 21,500 | 92 | 0.015 | | | | | | | | | | | | |
| | 1-2 | Phosphoric acid | 1.45 | 590 | 29,000 | 255 | | 0.015 | | | | | | | | | | | |
| | 1-3 | Phosphoric acid | 1.45 | 499 | 18,000 | 261 | | | 0.015 | | | | | | | | | | |
| | 1-4 | Phosphoric acid | 1.45 | 459 | 10,000 | 160 | | | | 0.015 | | | | | | | | | |
| | 1-5 | Phosphoric acid | 2.00 | 625 | 28,100 | 161 | | | | | 0.015 | | | | | | | | |
| | 1-6 | Phosphoric acid | 2.00 | 536 | 31,400 | 328 | | | | | | 0.015 | | | | | | | |
| | 1-7 | Phosphoric acid | 2.00 | 482 | 14,100 | 261 | | | | | | | 0.015 | | | | | | |
| | 1-8 | Phosphoric acid | 2.00 | 444 | 8,000 | 183 | | | | | | | | 0.015 | | | | | |
| | 1-9 | Phosphorous acid | 1.80 | 430 | 10,000 | 252 | | | | | | | | | 0.015 | | | | |
| | 1-10 | Carboxy | 1.80 | 336 | 11,000 | 158 | | | | | | | | | | 0.015 | | | |
| | 1-11 | - | 0 | - | 436 | 24 | | | | | | | | | | | 0.015 | | |
| Guar Gum (parts by mass) | | | | | 300 | 20 | | | | | | | | | | | | 0.015 | |
| calcium carbonate (parts by mass) | | | | | | | 100 | 100 | 100 | 100 | 100 | 100 | 100 | 100 | 100 | 100 | 100 | 100 | 100 |
| water (parts by mass) | | | | | | | 200 | 200 | 200 | 200 | 200 | 200 | 200 | 200 | 200 | 200 | 200 | 200 | 200 |
| Evaluation | | Dispersion Stability | | | | | A | B | A | A | B | B | A | A | B | B | C | C | C |

Table 2

| | | Distance between liquid surface and boundary surface (mm) | |
|---|---|---|---|
| | | Example 1-1 | Comparative Example 1-1 |
| Standing time (min) | 0 | 0 | 0 |
| | 5 | 0 | 6 |
| | 30 | 2 | 15 |
| | 60 | 2 | 15 |
| | 90 | 3 | 15 |

[Result]

As illustrated in Table 1, in the dilution solutions of the model pressure-feeding primers in Examples 1-1, 1-3, 1-4, 1-7, and 1-8, separation of calcium carbonate did not occur with the lapse of time, and thus a good dispersion stability was shown. In addition, in Examples 1-2, 1-5, 1-6, 1-9, and 1-10, although there was slight separation, a dispersion stability not causing any problem in use was shown. Meanwhile, in Comparative Example and Reference Example, significant separation occurred.

In addition, as illustrated in Table 2, in Example 1-1, a distance between the liquid surface within the screw bottle and a boundary surface of water generated by separation is significantly smaller than that in Comparative Example 1-1. Thus, it was found that despite standing still for a long time, separation was suppressed, and a high dispersion stability was shown.

From the results, it was found that in the pressure-feeding primer to which fibrous cellulose that contains ultrafine fibrous modified cellulose substituted with an ionic group is added, the dispersion stability of the calcium carbonate is improved.

(Pressure-Feeding Property Evaluation)

10 g of the model pressure-feeding primer of Example 1-1, Comparative Examples 1-1 and 1-2, and Reference Example 1-1 was put into a 50 mL disposable syringe (manufactured by Terumo Corporation), and the time required for extrusion of the entire amount was measured. The extrusion pressure at this time was about 0.1 kPa. The results are noted in Table 3.

Table 3

| | Example 1-1 | Comparative Example 1-1 | Comparative Example 1-2 | Reference Example 1-1 |
|---|---|---|---|---|
| Required Time (sec) | 32 | 71 | 64 | > 120 |

[Result]

In Example 1-1, it was found that the required time was about 30 sec, and a smooth extrusion was possible, suggesting that there is an effective action on dispersion stabilization of ultrafine particles. Meanwhile, in Comparative Examples 1-1 and 1-2, and Reference Example 1-1, a required extrusion time was more than twice that in Example 1-1.
It was found that the pressure-feeding primer containing the fibrous cellulose of the present invention is excellent in the dispersion stability, and can be pressure-fed at a lower pressure at the time of pressure-feeding.
Modified CNF, unmodified CNF and pulp fibers used in each of Examples and Comparative Examples are as follows.

[Production Example 2-1: Production of Dispersion Liquid of Phosphoric Acid Group-Introduced Pulp]

(Production of Phosphoric Acid Group-Introduced Pulp)

As raw material pulp, needle leaved tree kraft pulp manufactured by Oji Paper (solid content 93% by mass, basis weight 208 g/m$^2$, sheet form, Canada standard freeness (CSF) measured in accordance with JIS P 8121 after disaggregation is 700 mL) was used. On the raw material pulp, a phosphorylation treatment was performed as follows. First, a mixed aqueous solution of ammonium dihydrogen phosphate and urea was added to 100 parts by mass (absolute dry mass) of the raw material pulp, and adjustment was performed for 45 parts by mass of ammonium dihydrogen phosphate, 120 parts by mass of urea, and 150 parts by mass of water. Then, chemical-impregnated pulp was obtained. Next, the obtained chemical-impregnated pulp was heated by a hot air dryer of 165°C for 200 sec, and a phosphoric acid group was introduced into cellulose in the pulp to obtain phosphoric acid group-introduced pulp (hereinafter, also referred to as "phosphorylated pulp"). Next, a washing treatment was performed on the obtained phosphorylated pulp. The washing treatment was performed by repeating an operation in which a pulp dispersion liquid that was obtained by pouring 10 L of ion-exchange water into 100 g (absolute dry mass) of the phosphorylated pulp was stirred such that the pulp was uniformly dispersed, and then, filtering and dehydration were performed. The point in time when the electrical conductivity of the filtrate became 100 μS/cm or less was set as the end point of washing.
Next, a neutralization treatment was performed on the washed phosphorylated pulp in the following manner. First, the washed phosphorylated pulp was diluted with 10 L of ion-exchange water, and then was stirred while a 1 N sodium hydroxide aqueous solution was added thereto little by little so as to obtain a phosphorylated pulp slurry with pH of 12 or more and 13 or less. Next, the corresponding phosphorylated pulp slurry was dehydrated to obtain neutralized phosphorylated pulp. Then, the washing treatment was performed on the neutralized phosphorylated pulp.
On the phosphorylated pulp obtained in this manner, an infrared absorption spectrum was measured by using FT-IR. As a result, absorption based on a phosphoric acid group was observed around 1230 cm$^{-1}$, and then it was confirmed that the phosphoric acid group was added to the pulp. In addition, the amount of the phosphoric acid groups (the amount of strong acid groups), which was measured by a measurement method to be described below, was 1.45 mmol/g. In addition, the obtained phosphorylated pulp was provided, and analyzed by an X-ray diffraction device, and as a result, typical peaks were confirmed at two positions around 2θ=14° or more and 17° or less and around 2θ=22° or more and 23° or less, and it was confirmed that cellulose I-type crystals were included.
For the use, the obtained pulp was diluted to have a solid content concentration of 2% by mass. In addition, the fiber width of pulp fibers was measured by using a Kajaani fiber length analyzer (manufactured by Kajaani Automation Inc, FS-200), and the result was 30 μm.

[Production Example 2-2: Production of Dispersion Liquid of Phosphoric Acid Group-Containing Ultrafine Fibrous Modified Cellulose]

(Production of Phosphoric Acid Group-Introduced Pulp)

As raw material pulp, needle leaved tree kraft pulp manufactured by Oji Paper (solid content 93% by mass, basis weight 208 g/m$^2$, sheet form, Canada standard freeness (CSF) measured in accordance with JIS P 8121 after disaggregation is 700 mL) was used. On the raw material pulp, a phosphorylation treatment was performed as follows. First, a mixed aqueous solution of ammonium dihydrogen phosphate and urea was added to 100 parts by mass (absolute dry mass) of the raw material pulp, and adjustment was performed for 45 parts by mass of ammonium dihydrogen phosphate, 120 parts by mass of urea, and 150 parts by mass of water. Then, chemical-impregnated pulp was obtained. Next, the obtained chemical-impregnated pulp was heated by a hot air dryer of 165°C for 200 sec, and a phosphoric acid group was introduced into cellulose in the pulp to obtain phosphoric acid group-introduced pulp (phosphorylated pulp). Next, a washing treatment was performed on the obtained phosphorylated pulp. The washing treatment was performed by repeating an operation in which a pulp dispersion liquid that was obtained by pouring 10 L of ion-exchange

water into 100 g (absolute dry mass) of the phosphorylated pulp was stirred such that the pulp was uniformly dispersed, and then, filtering and dehydration were performed. The point in time when the electrical conductivity of the filtrate became 100 μS/cm or less was set as the end point of washing. The washed phosphorylated pulp was further subjected to the phosphorylation treatment, and the washing treatment in this order once.

Next, a neutralization treatment was performed on the washed phosphorylated pulp in the following manner. First, the washed phosphorylated pulp was diluted with 10 L of ion-exchange water, and then was stirred while a 1 N sodium hydroxide aqueous solution was added thereto little by little so as to obtain a phosphorylated pulp slurry with pH of 12 or more and 13 or less. Next, the corresponding phosphorylated pulp slurry was dehydrated to obtain neutralized phosphorylated pulp. Next, the washing treatment was performed on the neutralized phosphorylated pulp.

On the phosphorylated pulp obtained in this manner, an infrared absorption spectrum was measured by using FT-IR. As a result, absorption based on a phosphoric acid group was observed around 1230 $cm^{-1}$, and then it was confirmed that the phosphoric acid group was added to the pulp. In addition, the obtained phosphorylated pulp was provided, and analyzed by an X-ray diffraction device, and as a result, typical peaks were confirmed at two positions around $2\theta$=14° or more and 17° or less and around $2\theta$=22° or more and 23° or less, and it was confirmed that cellulose I-type crystals were included.

(Production of Fibrous Cellulose Dispersion Liquid)

Ion-exchange water was added to the obtained phosphorylated pulp to prepare a slurry with a solid content concentration of 2% by mass. This slurry was treated with a wet pulverizing device (manufactured by Sugino Machine limited, STAR BURST) at a pressure of 200 MPa six times, to obtain a modified CNF dispersion liquid 2-1 containing ultrafine fibrous modified cellulose. Through X-ray diffraction, it was confirmed that the ultrafine fibrous modified cellulose maintained the cellulose I-type crystals. In addition, when the fiber width of the ultrafine fibrous modified cellulose was measured by using a transmission type electron microscope, the result was 3 to 5 nm.

The amount of the phosphoric acid groups (the first dissociation amount) in the ultrafine fibrous modified cellulose, which was measured by the measurement method to be described below, was 2.00 mmol/g, and the degree of polymerization was 444.

(Production Example 2-3: Production of Dispersion Liquid of Phosphorous Acid Group-Containing Ultrafine Fibrous Modified Cellulose)

(Production of Phosphorous Acid Group-Introduced Pulp)

Phosphorous acid group-introduced pulp (hereinafter, also referred to as "phosphited pulp") was obtained by performing an operation in the same manner as in Production Example 2-1 except that 33 parts by mass of phosphorous acid (phosphonic acid) was used instead of ammonium dihydrogen phosphate.

Next, a washing treatment was performed on the obtained phosphited pulp. The washing treatment was performed by repeating an operation in which a pulp dispersion liquid that was obtained by pouring 10 L of ion-exchange water into 100 g (absolute dry mass) of the phosphited pulp was stirred such that the pulp was uniformly dispersed, and then, filtering and dehydration were performed. The point in time when the electrical conductivity of the filtrate became 100 μS/cm or less was set as the end point of washing.

Next, a neutralization treatment was performed on the washed phosphited pulp in the following manner. First, the washed phosphited pulp was diluted with 10 L of ion-exchange water, and then was stirred while a 1 N sodium hydroxide aqueous solution was added thereto little by little so as to obtain a phosphited pulp slurry with pH of 12 or more and 13 or less. Next, the corresponding phosphited pulp slurry was dehydrated to obtain neutralized phosphited pulp. Then, the washing treatment was performed on the neutralized phosphited pulp.

On the phosphited pulp obtained in this manner, an infrared absorption spectrum was measured by using FT-IR. As a result, absorption based on P=O of a phosphonate group as a tautomer of the phosphorous acid group was observed around 1210 $cm^{-1}$, and then it was confirmed that the phosphorous acid group (phosphonate group) was added to the pulp.

In addition, the obtained phosphited pulp was provided, and analyzed by an X-ray diffraction device, and as a result, typical peaks were confirmed at two positions around $2\theta$=14° or more and 17° or less and around $2\theta$=22° or more and 23° or less, and it was confirmed that cellulose I-type crystals were included.

(Production of Ultrafine Fibrous Modified Cellulose Dispersion Liquid)

Ion-exchange water was added to the obtained phosphited pulp to prepare a slurry with a solid content concentration of 2% by mass. This slurry was treated with a wet pulverizing device (manufactured by Sugino Machine limited,

STAR BURST) at a pressure of 200 MPa six times, to obtain a fibrous cellulose dispersion liquid containing ultrafine fibrous modified cellulose. Through X-ray diffraction, it was confirmed that the ultrafine fibrous modified cellulose maintained the cellulose I-type crystals. In addition, when the fiber width of the ultrafine fibrous modified cellulose was measured by using a transmission type electron microscope, the result was 3 to 5 nm.

The amount of the phosphorous acid groups (the first dissociated acid amount) in the fibrous cellulose, which was measured by the measurement method to be described below, was 1.80 mmol/g, and the degree of polymerization was 430.

[Production Example 2-4: Production of Dispersion Liquid of Carboxy Group-Containing Ultrafine Fibrous Modified Cellulose]

(Production of Carboxy Group-Introduced Pulp)

As raw material pulp, needle leaved tree kraft pulp manufactured by Oji Paper (solid content 93% by mass, basis weight 208 g/$m^2$, sheet form, Canada standard freeness (CSF) measured in accordance with JIS P 8121 after disaggregation is 700 mL) was used. On the raw material pulp, a TEMPO oxidation treatment was performed as follows.

First, the raw material pulp equivalent to 100 parts by mass (dry mass), 1.6 parts by mass of TEMPO (2,2,6,6-tetramethylpiperidine-1-oxyl), and 10 parts by mass of sodium bromide were dispersed in 10,000 parts by mass of water. Then, a sodium hypochlorite aqueous solution of 13% by mass was added to 1.0 g of the pulp up to 10 mmol and the reaction was started. During the reaction, a 0.5 M sodium hydroxide aqueous solution was added dropwise so that pH was maintained at 10 or more and 10.5 or less, and then the point in time when no change occurred in pH was considered as the end of the reaction.

Next, a washing treatment was performed on the obtained carboxy group-introduced pulp (hereinafter, also referred to as the "TEMPO oxidized pulp"). The washing treatment was performed by repeating an operation in which a dehydrated sheet was obtained by dehydrating the TEMPO oxidized pulp slurry, and was uniformly dispersed through stirring after 5,000 parts by mass of ion-exchange water was poured, and then filtering and dehydration were performed. The point in time when the electrical conductivity of the filtrate became 100 μS/cm or less was set as the end point of washing.

In addition, the obtained TEMPO oxidized pulp was provided, and analyzed by an X-ray diffraction device, and as a result, typical peaks were confirmed at two positions around $2\theta=14°$ or more and 17° or less and around $2\theta=22°$ or more and 23° or less, and it was confirmed that cellulose I-type crystals were included.

(Production of Fibrous Cellulose Dispersion Liquid)

Ion-exchange water was added to the obtained TEMPO oxidized pulp to prepare a slurry with a solid content concentration of 2% by mass. This slurry was treated with a wet pulverizing device (manufactured by Sugino Machine limited, STAR BURST) at a pressure of 200 MPa six times, to obtain fibrous cellulose dispersion liquid 2-10 containing ultrafine fibrous modified cellulose.

The amount of the carboxy groups in the fibrous cellulose, which was measured by the measurement method to be described below, was 1.80 mmol/g, and the degree of polymerization was 336.

[Production Example 2-5: Production of Ultrafine Fibrous Unmodified Cellulose Dispersion Liquid]

Ion-exchange water was added to needle leaved tree bleached kraft pulp (manufactured by Oji Paper Co., Ltd., solid content 93% by mass, needle leaved tree kraft pulp, basis weight 208 g/$m^2$, sheet form, Canada standard freeness (CSF) measured in accordance with JIS P 8121 after disaggregation is 700 mL) to prepare a slurry with a solid content concentration of 2% by mass. This slurry was treated with a wet pulverizing device (manufactured by Sugino Machine limited, STAR BURST) at a pressure of 200 MPa 20 times to obtain an ultrafine fibrous cellulose-containing dispersion liquid. The number-average fiber width of the ultrafine fibrous cellulose contained in the dispersion liquid was 1,000 nm or less.

[Production Example 2-6: Preparation of Dispersion Liquid of Unmodified Pulp Fibers 2-1]

For the use, needle leaved tree kraft pulp (manufactured by Oji Paper Co., Ltd., solid content 93% by mass, basis weight 208 g/$m^2$, sheet form, Canada standard freeness (CSF) measured in accordance with JIS P 8121 after disaggregation is 700 mL) was diluted to have a solid content concentration of 2% by mass. In addition, the fiber width of pulp fibers was measured by using a Kajaani fiber length analyzer (manufactured by Kajaani Automation Inc, FS-200), and the result was 30 μm.

[Production Example 2-7: Preparation of Dispersion Liquid of Unmodified Pulp Fibers 2-2]

Needle leaved tree kraft pulp (manufactured by Oji Paper Co., Ltd., solid content 93% by mass, basis weight 208 g/$m^2$, sheet form, Canada standard freeness (CSF) measured in accordance with JIS P 8121 after disaggregation is 700 mL) was subjected to beating by a double disc refiner until the irregular freeness became 100 mL so that a pulp dispersion liquid with a solid content concentration of 2% by mass was obtained. In addition, the fiber width of pulp fibers was measured by using a Kajaani fiber length analyzer (manufactured by Kajaani Automation Inc, FS-200), and the result was 15 μm.

<Measurement Method>

(Measurement on Amount of Phosphorus Oxoacid Groups in Fibrous Cellulose Dispersion Liquid)

The amount of ionic groups in ultrafine fibrous cellulose was measured by performing a treatment with an ion-exchange resin on a modified CNF-containing slurry that was produced by diluting an ultrafine fibrous modified cellulose dispersion liquid containing target modified CNF with ion-exchange water (a content of 0.2% by mass), and then performing titration using alkali.

The treatment with the ion-exchange resin was performed by adding a strong acid ion-exchange resin (Amberjet 1024; ORGANO corporation, conditioned) with a volume of 1/10 to the modified CNF-containing slurry, performing shaking for 1 h, and separating the resin from the slurry through pouring on a mesh with a mesh size of 90 μm.

In addition, the titration using alkali was performed by measuring the change in a pH value indicated by the slurry while adding 10 μL of a 0.1 N sodium hydroxide aqueous solution every 5 seconds to the modified CNF-containing slurry that had been subjected to the treatment with the ion-exchange resin. The titration was performed while blowing nitrogen gas to the slurry from 15 min before the start of titration. In this neutralization titration, on the curve plotting the measured pH relative to the addition amount of alkali, two points at which the increment (a differential value of pH relative to a dropping amount of alkali) is maximized are observed. Between these, a firstly obtained maximum point of the increment when addition of alkali is initiated is called a first end point, and a secondly obtained maximum point of the increment is called a second end point (Fig. 1). The amount of required alkali from the start of titration to the first end point is equal to a first dissociated acid amount in the slurry used for the titration. In addition, the amount of required alkali from the start of titration to the second end point is equal to the total dissociated acid amount in the slurry used for the titration. A value obtained by dividing the amount (mmol) of required alkali from the start of titration to the first end point by the solid content (g) in the slurry as a titration target was set as the amount of phosphorus oxoacid groups (the first dissociated acid amount) (mmol/g).

In regard to pulp obtained through the phosphorus oxoacid treatment, ion-exchange water was added to the phosphorylated pulp to prepare a slurry with a solid content concentration of 2% by mass, and this slurry was treated with a wet pulverizing device (manufactured by Sugino Machine limited, STAR BURST) at a pressure of 200 MPa six times. Then, on the obtained dispersion liquid, titration using alkali was performed in the same manner as in the above-described method.

(Measurement on Amount of Carboxy Groups in Fibrous Cellulose Dispersion Liquid)

The amount of carboxy groups in ultrafine fibrous cellulose was measured by a neutralization titration method. The amount of the carboxy groups in the ultrafine fibrous cellulose was measured by adding ion-exchange water to an ultrafine fibrous cellulose-containing dispersion liquid containing the target ultrafine fibrous cellulose to have a content of 0.2% by mass, performing a treatment with an ion-exchange resin, and then performing titration using alkali.

The treatment with the ion-exchange resin was performed by adding a strong acid ion-exchange resin (Amberjet 1024; manufactured by ORGANO CORPORATION, conditioned) with a volume of 1/10 to the ultrafine fibrous cellulose-containing dispersion liquid of 0.2% by mass, performing shaking for 1 h, and separating the resin from the slurry through pouring on a mesh with a mesh size of 90 μm.

In addition, the titration using alkali was performed by measuring the change in a pH value indicated by the slurry while adding a 0.1 N sodium hydroxide aqueous solution to the fibrous cellulose-containing dispersion liquid that had been subjected to the treatment with the ion-exchange resin. When the change in pH is observed while a sodium hydroxide aqueous solution is added, a titration curve illustrated in Fig. 4 is obtained. As illustrated in Fig. 4, in the neutralization titration, on the curve plotting the measured pH relative to the addition amount of alkali, one point at which the increment (a differential value of pH relative to a dropping amount of alkali) is maximized is observed. This maximum point of the increment is called a first end point. Here, in Fig. 4, a region from the start of titration to the first end point is called a first region. The amount of alkali required for the first region is equal to the amount of the carboxy groups in the slurry used for titration. Then, an introduction amount (mmol/g) of the carboxy groups was calculated by dividing the

amount (mmol) of alkali required for the first region on the titration curve by the solid content (g) in the ultrafine fibrous cellulose-containing dispersion liquid as a titration target.

The above-described introduction amount (mmol/g) of the carboxy groups indicates the amount of substituents (hereinafter, referred to as the amount of the carboxy groups (acid type)) per 1 g of the mass of the fibrous cellulose when the counterion of the carboxy group is a hydrogen ion (H+).

(Measurement on Degree of Polymerization of Fibrous Cellulose)

The degree of polymerization of fibrous cellulose was measured according to Tappi T230. That is, after measurement was performed on a viscosity (referred to as $\eta_1$) measured when fibrous cellulose as a measurement target was dispersed in a dispersion medium, and a blank viscosity (referred to as $\eta_0$) measured by only a dispersion medium, a specific viscosity ($\eta_{sp}$) and an intrinsic viscosity ([η]) were measured according to the following formulas.

$$\eta_{sp}=(\eta_1/\eta_0)-1$$

$$[\eta]=\eta_{sp}/(c(1+0.28\times\eta_{sp}))$$

Here, "c" in the formula indicates a concentration of the fibrous cellulose at the time of the viscosity measurement.

In addition, the degree of polymerization (DP) of the fibrous cellulose was calculated from the following formula.

$$DP=1.75\times[\eta]$$

This degree of polymerization is an average degree of polymerization measured according to a viscosity method, and thus may be referred to as a "viscosity-average polymerization degree."

(Measurement on Viscosity of Fibrous Cellulose Dispersion Liquid)

The viscosity of the fibrous cellulose dispersion liquid was measured as follows. First, fibrous cellulose was diluted with ion-exchange water such that the solid content concentration became 0.4%, and then was stirred by a disperser at 1,500 rpm for 5 min. Then, the viscosity of the dispersion liquid obtained in this manner was measured by using a B-type viscometer (manufactured by BLOOKFIELD, an analog viscometer T-LVT). Under the measurement condition of a rotation speed of 3 rpm, 3 min after the start of the measurement, the viscosity value was set as the viscosity of the corresponding dispersion liquid. In addition, the dispersion liquid as a measurement target was allowed to stand still for 24 h under an environment of 23°C and a relative humidity of 50% before the measurement. The liquid temperature of the dispersion liquid at the time of measurement was 23°C.

(Production of Model Pressure-Feeding Primer)

(Example 2-1)

100 parts by mass of porous calcium carbonate, and 200 parts by mass of water were mixed, and the fibrous cellulose of the present invention, which contains modified CNF and pulp fibers, was added thereto such that the solid contents became the addition amounts noted in Table 4. Through sufficient mixing, a model pressure-feeding primer was produced.

As for the phosphoric acid group-containing modified CNF, the dispersion liquid produced in Production Example 2-2 was used. In addition, as for the pulp fibers, the dispersion liquid of the unmodified pulp fibers 2-1 produced in Production Example 2-6 was used.

(Examples 2-2 to 2-7, and Comparative Examples 2-1 to 2-5)

Model pressure-feeding primers were produced in the same manner as in Example 2-1 except that the fibrous cellulose used in Example 2-1 was changed such that addition amounts of the modified CNF, the unmodified CNF, and the pulp fibers became those noted in Table 4.

Here, as for the modified CNF, the pulp fibers, and the unmodified CNF, the following dispersion liquids obtained in Production Examples were used in which each addition amount corresponds to the solid content.

- Modified CNF (ionic group: phosphoric acid group): Production Example 2-2
- Modified CNF (ionic group: phosphorous acid group): Production Example 2-3
- Modified CNF (ionic group: carboxy group): Production Example 2-4
- Pulp fibers (unmodified, fiber width=30 μm): Production Example 2-6
- Pulp fibers (unmodified, fiber width=15 μm): Production Example 2-7
- Pulp fibers (introduction of phosphoric acid group, fiber width=30 μm): Production Example 2-1
- Unmodified CNF: Production Example 2-5

(Reference Example 2-1)

A model pressure-feeding primer was produced in the same manner as in Example 2-1 except that water was used instead of the modified CNF and the pulp fibers.

<Evaluation Method>

(Dispersion Stability Evaluation)

The model pressure-feeding primer of Examples, Comparative Examples, and Reference Example was diluted with ion-exchange water to have a solid content concentration of 1%, and was separately collected by a 10 mL screw vial bottle (manufactured by AS ONE Corporation), and then was allowed to stand still for 5 min. The distance from the bottom of the vial bottle to the liquid surface was set as 3 cm. The dispersion stability was evaluated according to the following evaluation criteria. The results are noted in Table 4.

A: a good dispersion stability is shown without any separation at all
B: a good dispersion stability is shown with almost no separation
C: a dispersion stability not causing any problem in use is shown although there is slight separation
D: separation is recognized with the lapse of time, and use is impossible
E: significant separation is recognized, and use is impossible

In Comparative Examples 2-1 to 2-3, and 2-5, since pulp fibers were precipitated, the viscosity could not be measured. In addition, on Reference Example 2-1, measurement was not performed.

On Examples 2-1, 2-5, and 2-6, and Comparative Example 2-1, a distance between the liquid surface within the screw bottle and the interface of water generated by separation was measured. The results are noted in Table 5.

Table 4-1

| | Ionic group | Introduction amount (mmol/g) | Fiber width | Example | | | | | | |
|---|---|---|---|---|---|---|---|---|---|---|
| | | | | 2-1 | 2-2 | 2-3 | 2-4 | 2-5 | 2-6 | 2-7 |
| Modified CNF (parts by mass) | Phosphoric acid group | 2.00 | 3~5 nm | 0.005 | 0.005 | | | 0.005 | 0.005 | 0.015 |
| | Phosphorous acid group | 1.80 | 3~5 nm | | | 0.005 | | | | |
| | Carboxy group | 1.80 | 3~5 nm | | | | 0.005 | | | |
| Pulp fibers (parts by mass) | | - | 30 μm | 0.010 | | 0.010 | 0.010 | | | |
| | | - | 15 μm | | 0.010 | | | | | |
| | Phosphoric acid group | 1.45 | 30 μm | | | | | 0.010 | | |
| Unmodified CNF (parts by mass) | | | 20 nm | | | | | | 0.010 | |
| Calcium carbonate (parts by mass) | | | | 100 | 100 | 100 | 100 | 100 | 100 | 100 |
| Water (parts by mass) | | | | 200 | 200 | 200 | 200 | 200 | 200 | 200 |
| Evaluation | Dispersion stability | | | A | A | A | B | A | A | A |
| | 0.4% Viscosity of composition (mPa·s) | | | 180 | 420 | 200 | 170 | 400 | 1,290 | 8,000 |

Table 4-2

| | Ionic group | Introduction amount (mmol/g) | Fiber width | Comparative Example | | | | | Reference Example |
|---|---|---|---|---|---|---|---|---|---|
| | | | | 2-1 | 2-2 | 2-3 | 2-4 | 2-5 | 2-1 |
| Modified CNF (parts by mass) | Phosphoric acid group | 2.00 | 3~5 nm | | | | | | |
| | Phosphorous acid group | 1.80 | 3~5 nm | | | | | | |
| | Carboxy group | 1.80 | 3~5 nm | | | | | | |
| Pulp fibers (parts by mass) | - | - | 30 μm | 0.015 | | 0.010 | | 0.010 | |
| | | - | 15 μm | | | | | | |
| | Phosphoric acid group | 1.45 | 30 μm | | 0.015 | 0.005 | | | |
| Unmodified CNF (parts by mass) | | | 20 nm | | | | 0.015 | 0.005 | |
| Calcium carbonate (parts by mass) | | | | 100 | 100 | 100 | 100 | 100 | 100 |
| Water (parts by mass) | | | | 200 | 200 | 200 | 200 | 200 | 200 |
| Evaluation | Dispersion stability | | | E | D | D | C | D | E |
| | 0.4% Viscosity of composition (mPa·s) | | | - | - | - | 436 | - | - |

Table 5

| | | Distance between liquid surface and boundary surface (mm) | | | |
|---|---|---|---|---|---|
| | | Example 2-1 | Example 2-5 | Example 2-6 | Comparative Example 2-1 |
| Standing time (min) | 0 | 0 | 0 | 0 | 0 |
| | 5 | 0 | 0 | 0 | 10 |
| | 30 | 3 | 1 | 0 | 14 |
| | 60 | 4 | 1.5 | 1 | 15 |
| | 90 | 4 | 2 | 1.5 | 15 |

[Result]

As illustrated in Table 4, in the dilution solutions of the model pressure-feeding primers in Examples 2-1 to 2-3, 2-5, and 2-6, separation of calcium carbonate did not occur with the lapse of time, and thus a good dispersion stability was shown. In addition, in Example 2-4 as well, a good dispersion stability was shown with almost no separation. In addition, when only the modified CNF was used as in Example 2-7, a good dispersion stability was shown but the viscosity was slightly high. Thus, from the viewpoint of handleability in actual use, it was found that a use in combination with the unmodified CNF or the pulp fibers is preferable. Meanwhile, as illustrated in Examples 2-1 to 2-6, when at least one selected from the unmodified CNF and the pulp fibers was used in combination with the modified CNF, it was possible to reduce the viscosity of the fibrous cellulose dispersion liquid while maintaining a sufficient dispersion stability. Thus, the handleability in actual use was significantly improved. Meanwhile, in Comparative Examples 2-1 to 2-3, and 2-5, a sufficient dispersion stability was not obtained. In addition, in Comparative Example 2-4 in which the unmodified CNF and the pulp fibers were used in combination, the dispersion stability was obtained, but the dispersion stability based on the lapse of time was inferior to those in Examples in which the modified CNF was used.
In addition, as illustrated in Table 5, in Examples 2-1, 2-5, and 2-6, a distance between the liquid surface within the screw bottle and a boundary surface of water generated by separation is significantly smaller than that in Comparative Example 2-1. Thus, it was found that despite standing still for a long time, separation was suppressed, and a high dispersion stability was shown.
From the results, it was found that in the pressure-feeding primer to which fibrous cellulose that contains the modified CNF and at least one selected from the unmodified CNF and the pulp fibers is added, the dispersion stability of the calcium carbonate is improved and the viscosity of the corresponding fibrous cellulose dispersion liquid is low, and thus the handleability in actual use is excellent.

(Pressure-Feeding Property Evaluation)

10 g of the model pressure-feeding primer of Examples 2-1, 2-5 and 2-6, Comparative Examples 2-1, and 2-2, and Reference Example 2-1 was put into a 50 mL disposable syringe (manufactured by Terumo Corporation), and the time required for extrusion of the entire amount was measured. The extrusion pressure at this time was about 0.1 kPa. The results are noted in Table 6.

Table 6

| | Example 2-1 | Example 2-5 | Example 2-6 | Comparative Example 2-1 | Comparative Example 2-2 | Reference Example 2-1 |
|---|---|---|---|---|---|---|
| Required time (sec) | 54 | 36 | 40 | > 120 | > 120 | > 120 |

[Result]

In Examples 2-1, 2-5, and 2-6, it was found that the required time was within 60 sec and a smooth extrusion was possible, suggesting that there is an effective action on dispersion stabilization of calcium carbonate powder. Meanwhile, in Comparative Examples 2-1 and 2-2 and Reference Example 2-1, the required extrusion time was 120 sec or more (more than twice those in Examples).
It was found that the pressure-feeding primer containing the fibrous cellulose of the present invention, which

contains the modified CNF, and at least one selected from the pulp fibers and the unmodified CNF, is excellent in the dispersion stability, and can be pressure-fed at a lower pressure at the time of pressure-feeding. In addition, in the case of the fibrous cellulose as a dispersion liquid, the viscosity is low, and the handleability in actual use is also excellent.

Industrial Applicability

According to the fibrous cellulose of the present invention, it is possible to provide a concrete pump pressure-feeding primer containing calcium carbonate powder, which is excellent in the dispersion stability and the pressure-feeding property. Thus, even with a small amount of use, it is expected that pressure-feeding of concrete can be smoothly started through a pipe. In addition, it is possible to provide a concrete pump pressure-feeding primer that contains at least one selected from the group consisting of pulp fibers and unmodified CNF in addition to modified CNF, and thus is more excellent in the handleability in actual use.

## Claims

1. Fibrous cellulose used for producing a concrete pump pressure-feeding primer through mixing with calcium carbonate powder,
wherein the fibrous cellulose contains ultrafine fibrous modified cellulose which has an ionic group and has a fiber width of 1,000 nm or less.

2. The fibrous cellulose according to claim 1, wherein the fibrous cellulose further contains at least one selected from a group consisting of pulp fibers having a fiber width of 10 μm or more and ultrafine fibrous cellulose having a fiber width of 1,000 nm or less and having no ionic group.

3. The fibrous cellulose according to claim 2, wherein the fibrous cellulose contains the pulp fibers having a fiber width of 10 μm or more, and a mass ratio of the pulp fibers to the ultrafine fibrous modified cellulose (pulp fibers/ultrafine fibrous modified cellulose) is 30/70 to 90/10.

4. The fibrous cellulose according to claim 2, wherein the fibrous cellulose contains the ultrafine fibrous cellulose having no ionic group, and a mass ratio of the ultrafine fibrous cellulose containing no ionic group to the ultrafine fibrous modified cellulose (ultrafine fibrous cellulose containing no ionic group/ultrafine fibrous modified cellulose) is 30/70 to 90/10.

5. The fibrous cellulose according to any one of claims 1 to 4, wherein a viscosity of the fibrous cellulose (a dispersion liquid with a solid content concentration of 0.4%, 23°C) is 500 mPa·s or more.

6. The fibrous cellulose according to any one of claims 1 to 5, wherein a thixotropic index (TI value) of the fibrous cellulose, which is represented by a following formula (1), is 30 or more;

$$\text{TI value} = (\text{viscosity at a shear rate of } 1/\text{s})/(\text{viscosity at a shear rate of } 1{,}000/\text{s}) \qquad (1)$$

wherein the viscosity is a viscosity of a dispersion liquid with a solid content concentration of 0.4%, at 23°C.

7. The fibrous cellulose according to any one of claims 1 to 6, wherein a content of the calcium carbonate powder in a solid content of the concrete pump pressure-feeding primer is 50% by mass or more.

8. The fibrous cellulose according to any one of claims 1 to 7, wherein an amount of the fibrous cellulose mixed with 100 parts by mass of the calcium carbonate powder is 0.0001 parts by mass or more and 100 parts by mass or less.

9. The fibrous cellulose according to any one of claims 1 to 8, wherein the calcium carbonate powder contains porous calcium carbonate powder.

10. The fibrous cellulose according to any one of claims 1 to 9, which is further mixed with at least one selected from a pigment, an antioxidant, and a pH adjuster.

[Fig. 1]

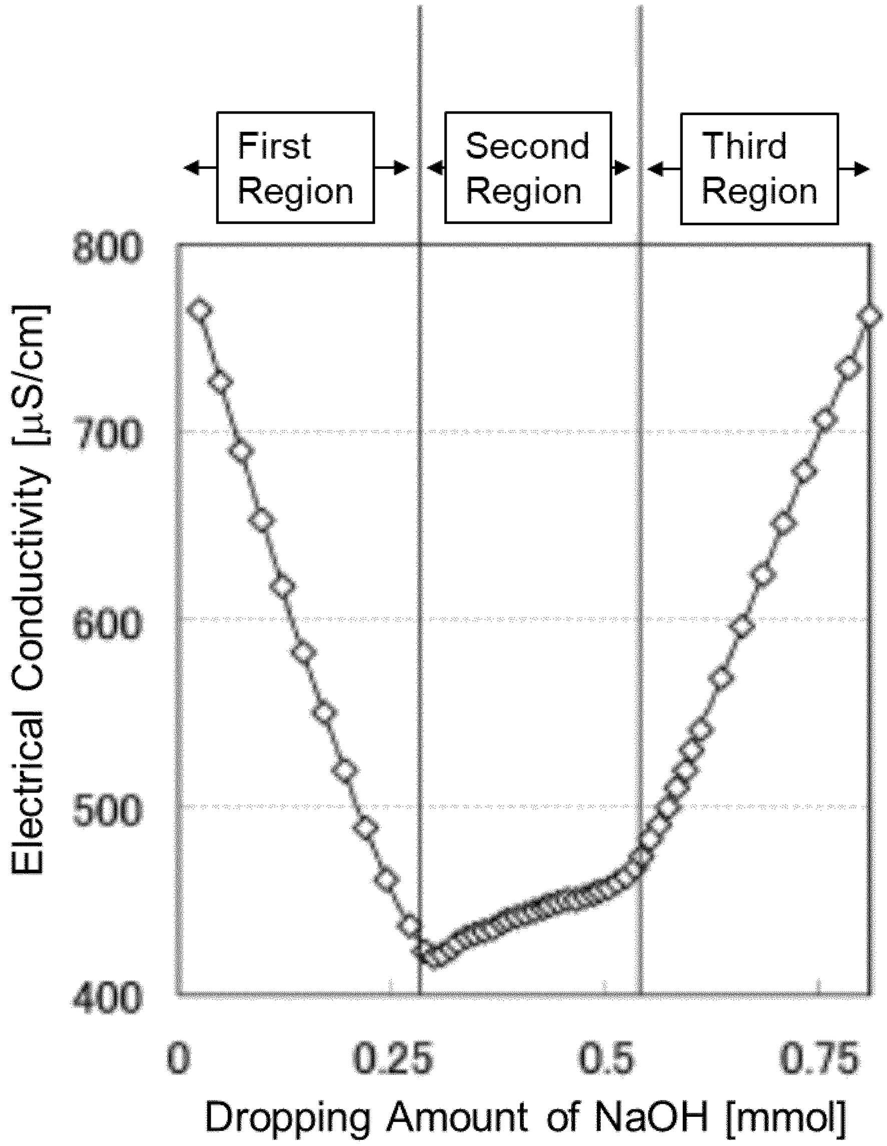
First Region
Second Region
Third Region
800
700
600
500
400
Electrical Conductivity [µS/cm]
0
0.25
0.5
0.75
Dropping Amount of NaOH [mmol]

[Fig. 2]

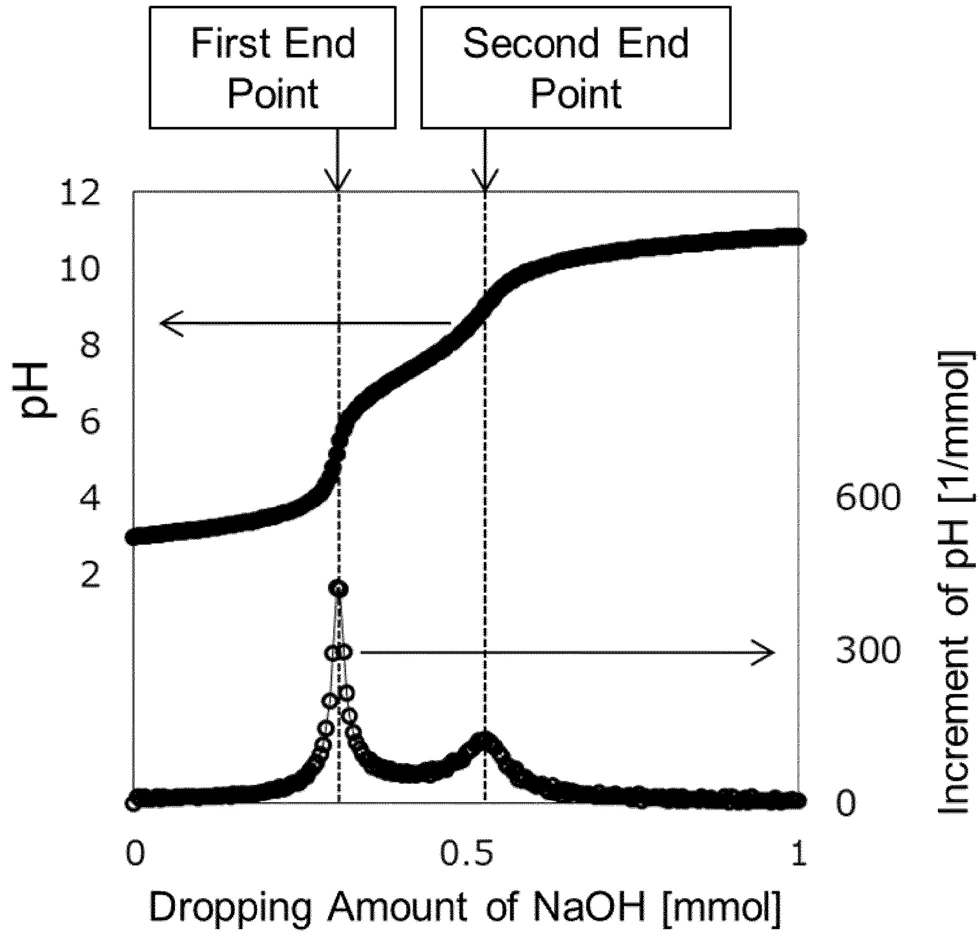
First End Point
Second End Point
12
10
8
6
4
2
pH
600
300
0
Increment of pH [1/mmol]
0
0.5
1
Dropping Amount of NaOH [mmol]

[Fig. 3]

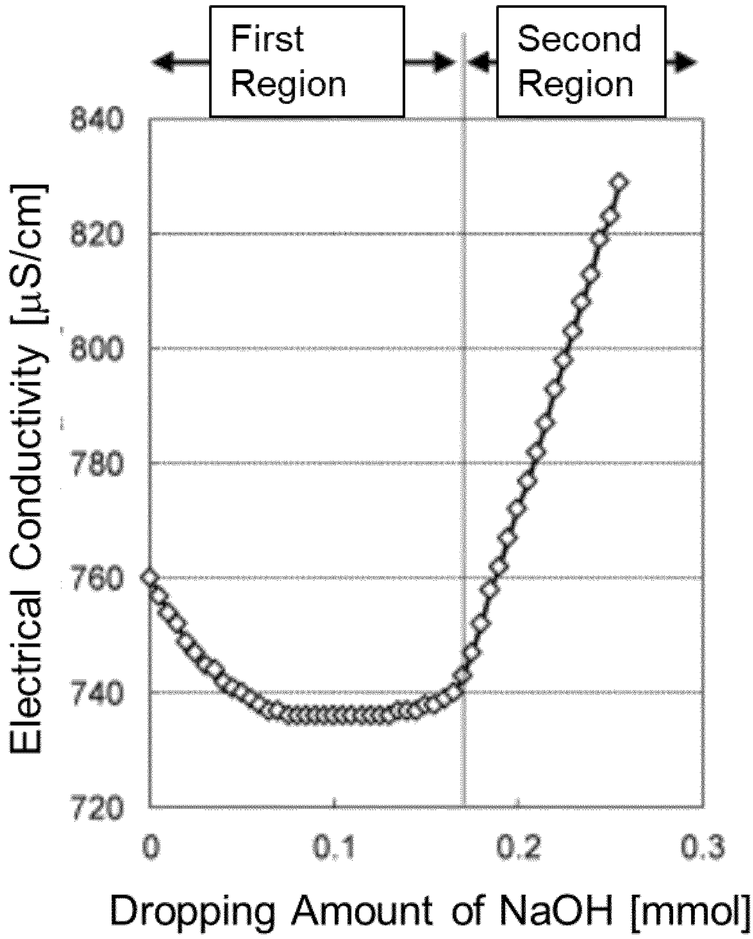
First Region
Second Region
840
820
800
780
760
740
720
0
0.1
0.2
0.3
Electrical Conductivity [μS/cm]
Dropping Amount of NaOH [mmol]

[Fig. 4]

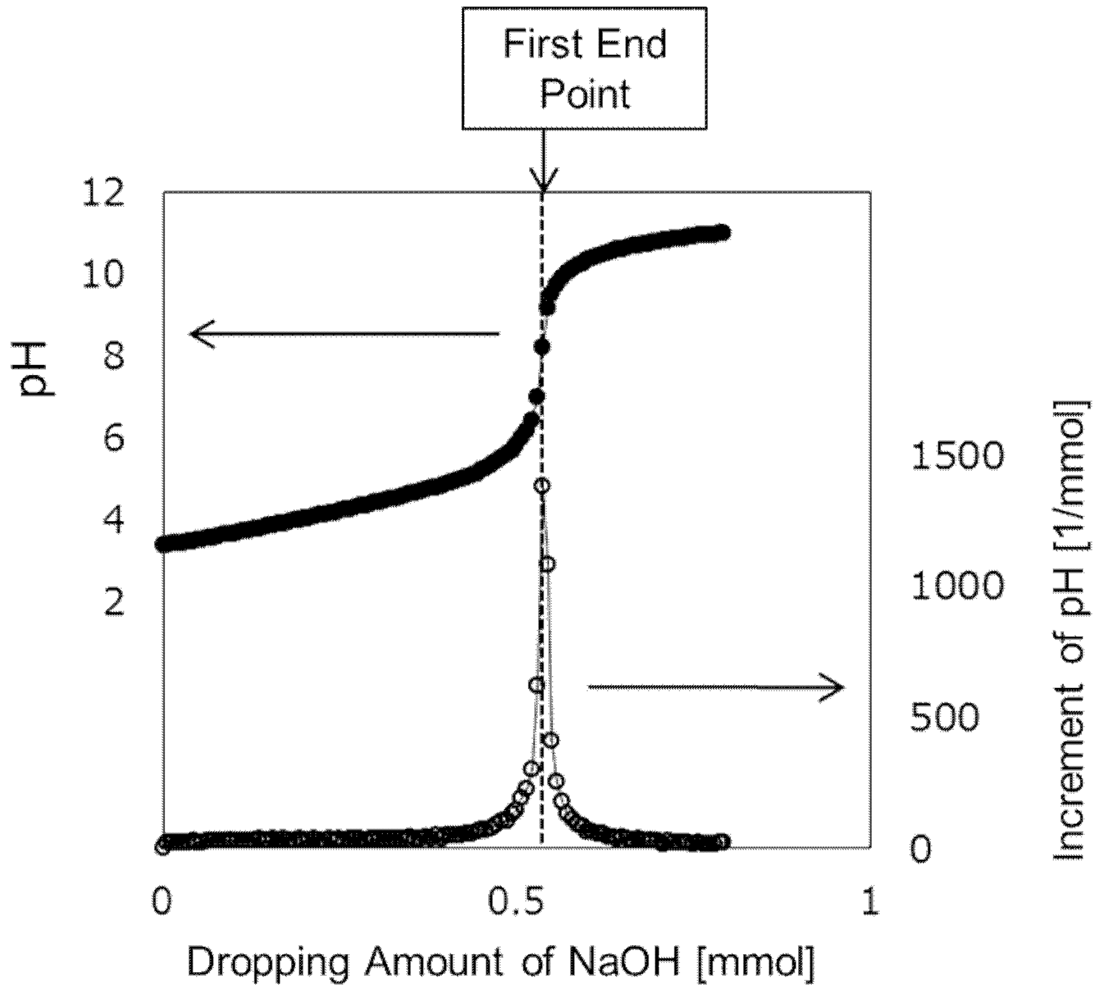
First End Point
12
10
8
6
4
2
pH
1500
1000
500
0
Increment of pH [1/mmol]
0
0.5
1
Dropping Amount of NaOH [mmol]

**INTERNATIONAL SEARCH REPORT**

International application No.
PCT/JP2019/047748

A. CLASSIFICATION OF SUBJECT MATTER
Int. Cl. B28C7/16(2006.01)i, C09K3/00(2006.01)n, D21H11/18(2006.01)i, D21H11/20(2006.01)i
FI: B28C7/16, D21H11/18, D21H11/20, C09K3/00 Q
According to International Patent Classification (IPC) or to both national classification and IPC

B. FIELDS SEARCHED
Minimum documentation searched (classification system followed by classification symbols)
Int. Cl. B28C7/16, C09K3/00, D21H11/18, D21H11/20

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2000-34461 A (SUMITOMO SEIKA CHEMICALS CO., LTD.) 02 February 2000, entire text | 1-10 |
| A | JP 2012-96530 A (CHEMIUS JAPAN KK) 24 May 2012, entire text | 1-10 |
| A | JP 11-10630 A (AIGAMI SANGYO KK) 19 January 1999, entire text | 1-10 |
| A | JP 2017-25235 A (DAI-ICHI KOGYO SEIYAKU CO., LTD.) 02 February 2017, entire text | 1-10 |
| P, A | JP 2019-123793 A (AKE CITE CO., LTD.) 25 July 2019, entire text | 1-10 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07.02.2020 | 18.02.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/047748

C (Continuation). DOCUMENTS CONSIDERED TO BE RELEVANT

| Category* | Citation of document, with indication, where appropriate, of the relevant passages | Relevant to claim No. |
|---|---|---|
| P, A | JP 2019-82101 A (KAWABATA KOGYO KK) 30 May 2019, entire text | 1-10 |

Form PCT/ISA/210 (continuation of second sheet) (January 2015)

**INTERNATIONAL SEARCH REPORT**
Information on patent family members

International application No.
PCT/JP2019/047748

| Patent Documents referred to in the Report | Publication Date | Patent Family | Publication Date |
|---|---|---|---|
| JP 2000-34461 A | 02.02.2000 | (Family: none) | |
| JP 2012-96530 A | 24.05.2012 | (Family: none) | |
| JP 11-10630 A | 19.01.1999 | (Family: none) | |
| JP 2017-25235 A | 02.02.2017 | (Family: none) | |
| JP 2019-123793 A | 25.07.2019 | WO 2019/142726 A1<br>entire text | |
| JP 2019-82101 A | 30.05.2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000034461 A


### Non-patent literature cited in the description


- **SEAGAL et al.** *Textile Research Journal,* 1959, vol. 29, 786